# EUROPEAN PATENT APPLICATION

(11) **EP 2 163 921 A1**
(43) Date of publication of application: **17.03.2010**
(21) Application number: 08765256.6
(22) Date of filing: 06.06.2008
(51) Int. Cl.: G02B 5/22, B32B 27/18, G09F 9/00

(54) **NEAR-INFRARED-SHIELDING MATERIAL , LAMINATE INCLUDING THE SAME, AND OPTICAL FILTER FOR DISPLAY**

(30) Priority: 08.06.2007 JP 2007153246; 04.09.2007 JP 2007229124; 04.09.2007 JP 2007229133
(71) Applicant: Bridgestone Corporation, Tokyo 104-0031 (JP)
(72) Inventor: SUZUKI, Yuji, Yokohama-shi Kanagawa 244-8510 (JP); TAKAHASHI, Saori, Kanagawa 244-8510 (JP)
(74) Representative: Whalley, Kevin
(86) International application number: PCT/JP2008/060443
(87) International publication number: WO 2008/149974

(57) **Abstract**

To provide a laminate which is excellent in heat-ray shielding properties, transparency, and weatherability and is suitable for use in laminated glass; and an optical filter for display which has excellent near-infrared shielding properties and is excellent in transparency, weatherability, and display performance.

The laminate comprises two substrates and an intermediate layer sandwiched therebetween and bonded and united thereto, wherein a heat-ray shielding layer, a plastic film, and an intermediate layer have been interposed between the intermediate layer and the substrate. The heat-ray shielding layer comprises tungsten oxide and/or composite tungsten oxide, and the intermediate layer comprises a compound showing maximum absorption in the wavelength region of 200-500 nm. The optical filter for displays comprises a near-infrared shielding layer containing tungsten oxide and/or composite tungsten oxide and at least one other functional layer containing a compound showing maximum absorption in the wavelength region of 200-500 nm.

## Description

### Field of the invention

The present invention relates to a near-infrared shielding material having near-infrared shielding function, a laminate including the shielding material useful in a safety glass such as laminated glass or a film-reinforced glass (e.g., bilayer, window film) which has excellent impact resistance and penetration resistance (resistance to passing through) and is effective in prevention of crimes and which is used in an automobile, a railway vehicle, a building and a showcase, an optical filter for display, and a display provided with the optical filter, especially plasma display panel (PDP).

### Description of the Related Art

As a glass used in automobile, especially windshield, a laminated glass having a structure that two glass plates are bonded through a transparent adhesive layer (intermediate layer) is generally employed. The transparent adhesive layer is formed from, for example, PVB (polyvinyl butyral) or EVA (ethylene/vinyl acetate copolymer), and the use of the transparent adhesive layer enhances penetration resistance of the laminated glass. If external impact is given to the laminated glass, the transparent adhesive layer prevents the glass broken by the impact from scattering because the layer adheres to pieces of the broken glass. Even if the laminated glass for automobile is destroyed for the purpose of robbery or invasion, the window of the laminated glass cannot be opened. Hence, the laminated glass is useful as glass for prevention of crimes.

In contrast, side windows (side glasses) such as door glass and a glass inserted in window in automobile are scarcely destroyed due to traffic accident, and therefore the glasses do not need such excellent penetration resistance as the above-mentioned laminated glass has. As a result, for the door glass, one glass plate consisting of slightly reinforcing glass has been employed. However, the use of only such a glass plate is used in the door glass brings about the following disadvantages:
(1) the glass is poor in impact resistance and penetration resistance (passing through resistance) compared with the laminated glass;
(2) if the glass is destroyed for the purpose of robbery or invasion, it turns into many pieces of the glass to permit window to open.
Therefore, it is also now under investigation to use a glass having characteristics of the above-mentioned laminated glass for the side window of an automobile (e.g. a door glass or inserted glass).
As the laminated glass suitable for the above-mentioned use, Patent Document 1 and Patent Document 2 describe a film-reinforced glass in which a plastic film is bonded onto a glass plate through a transparent adhesive layer.

Hence, the transparent adhesive layer for a laminated glass having function that bonds two glass plates to each other or a glass plate (for film-reinforced glass) to a plastic film is required to have excellent adhesion and penetration resistance mentioned above.

Although the laminated glass has generally excellent adhesion and penetration resistance and hence enhanced safety, heat-ray shielding properties are not taken into consideration in the laminated glass. A glass having heat-ray shielding properties is available commercially as, for example, a heat-ray shielding glass (heat-ray cut glass). The heat-ray shielding glass is prepared by forming a multi-layer coating of metal/metal oxide on a surface of a glass plate through vacuum deposition or sputtering of metal or the like, for the purpose of direct shielding of sunlight. The multi-layer coating is apt to suffer from abrasion given from outside and has poor chemical resistance. On the heat-ray shielding glass, an intermediate layer (e.g., EVA layer) is generally superposed to prepare a laminated glass.

Further, the heat-ray shielding glass uses metal, and therefore brings about reduction of transparency and has adverse effect on communication function such as cell phone or car navigation system. Furthermore the heat-ray shielding glass is expensive price because of use of multi-layer coating.

Patent Document 3 describes use of a layer including hydrophilic resin such as PVA and inorganic particle such as silica, antimony oxide, titania, alumina, zirconia or tungsten oxide as an intermediate layer of a laminated glass. Moreover, Patent Document 4 describes use of a plasticized polyvinyl butyral layer containing metal oxide as an intermediate layer of a laminated glass.

Also, to a display, it has been studied to add heat-ray or near infrared shielding function. For example, plasma display panel (PDP) is usually provided with a front filter. The front filter is used for near infrared shielding, improvement of color reproducibility (enhancement of purity emission color), electromagnetic wave shielding, enhancement of contrast in bright light (antireflection), protection of emission panel and heat shielding from emission panel.

Near infrared rays emitting from the light emitting part of the PDP causes malfunction of infrared remote control used in a household-use television or video deck are possibly radiated. In order to avoid the malfunction, it is necessary to reduce the infrared rays. Further, electromagnetic wave emitting from the light emitting part of the PDP has an effect on human body or a precision equipment and therefore it is necessary to reduce the electromagnetic wave to avoid the adverse effect. Furthermore, it is demanded that light emitting from the light emitting part of the PDP is improved in color reproducibility (purity emission color) by filtered correction such that the light becomes natural color for human vision. Moreover, an image of a display is desirably visible in sufficient contrast such that the image is not inhibited by reflection of light from outside in a bright place (e.g., a bright room). In addition, in order not to surprise a user even if the user directly touches the display by hand, heat emitting from the light emitting part of the PDP is desirably shielded.

As an optical filter for PDP to meet the above-mentioned objections, an optical filter having various functions such as antireflection, near infrared shielding and electromagnetic wave shielding, etc., is generally used. However, in actuality, optical filters having each of the functions and optical filters having two functions are appropriately combined and bonded with each other to prepare an optical filter for PDP, which is used.

Particularly, the near-infrared ray emitting from the light emitting part of the PDP causes malfunction of peripheral equipment and therefore it is necessary to effectively shield the near-infrared ray. Further the shielding causes reduction of color reproducibility, and hence it is required to prevent the reduction.

Patent Document 5 discloses a near-infrared shielding film comprising a transparent film layer (1), a transparent near-infrared shielding layer (2) containing a diimmonium compound as a near-infrared absorber, a transparent resin film layer (3) and a transparent color compensation layer (4) containing a dye for compensating the color of the transparent film near-infrared shielding layer (2), the layers being laminated to form a multi-layer structure.

Patent Document 1: JP2002-046217 A
Patent Document 2: JP2002-068785 A
Patent document 3: JP06-144891 A
Patent document 4: JP2001-302288 A
Patent document 5: JP2005-18973 8 A
Patent document 6: JP2006-287236 A (mentioned later)

### Disclosure of the Invention

### Problem to be solved by the Invention

Though a laminated glass having an intermediate layer described in Patent Document 3 or 4 as mentioned previously uses various metal oxides to shield heat-ray, the laminated glass enhanced in heat-ray shielding properties is apt to reduce in its transparency. Further the present inventors have revealed that the use of tungsten oxide brings about both of enhanced heat-ray shielding properties and transparency but does not result in sufficient transparency after a long period of use.

In contrast, an optical filter used in a display, especially plasma display panel (PDP) is required to have excellent near-infrared shielding properties (e.g., to effectively prevent the malfunction of peripheral equipment) and transparency as well. The use of the tungsten oxide as a near-infrared absorber greatly improves near-infrared shielding properties but does not result in sufficient transparency after a long period of use as mentioned above.

Moreover, an optical filter for PDP provided with a transparent near-infrared shielding layer containing a diimmonium compound as a near-infrared absorber as described in Patent Document 5 does not show sufficient near-infrared absorbing properties, and therefore materials having further excellent near-infrared absorbing properties is demanded. Patent Document 6 (JP2006-287236 A) proposes tungsten oxide and composite tungsten oxide improved in near-infrared shielding properties.

The tungsten oxide strongly absorbs near-infrared ray and therefore effectively prevents the malfunction of peripheral equipment. However, the tungsten oxide has a little absorption in long wavelength side of visible light to cause the visible light to become bluish. Further, though a conventional PDP filter contains a neon-cut dye having absorption maximum in a wavelength region of 560 to 610nm to remove unnecessary orange light having wavelength of approx. 590nm derived from neon emission, the addition of the neon-cut dye to a PDP filter containing the tungsten oxide causes the visible light to become more bluish. This PDP filter shows excellent near-infrared shielding properties but reduces displaying properties that the display intrinsically has.

The object of the present invention is to provide a near-infrared shielding material having excellent heat-ray shielding properties and transparency.

Further, the object of the present invention is to provide a near-infrared shielding material which is excellent in heat-ray shielding properties, transparency and weatherability.

Furthermore, the object of the present invention is to provide a near-infrared shielding material (filter) which has excellent near-infrared shielding properties, and whose use in a display panel results in good displaying properties.

Moreover, the object of the present invention is to provide a near-infrared shielding material (filter) which is excellent in near-infrared shielding properties, and color reproducibility.

Further, the object of the present invention is to provide a laminate suitable for a laminated glass which is excellent in heat-ray shielding properties, transparency, and weatherability.

Furthermore, the object of the present invention is to provide a laminate suitable for a laminated glass which is excellent in heat-ray shielding properties, transparency, and weatherability, and further is excellent in impact resistance and penetration resistance.

Further, the object of the present invention is to provide an optical filter for display which is excellent in near-infrared shielding properties, transparency, and weatherability.

Furthermore, the object of the present invention is to provide an optical filter for display which is excellent in near-infrared shielding properties, and displaying properties.

### Means for solving problem

Tungsten oxide and/or composite tungsten oxide strongly absorb a near-infrared and therefore show excellent near-infrared shielding properties. However, in case a near-infrared shielding filter including the oxide is used, for example, as a laminated glass, the laminated glass occasionally suffers from bluish discoloration. This is considered because the laminated glass is exposed to sun light for a long period of time by allowing it to stand outdoors for a long period. Regarding this point, it is known that cesium tungsten oxide forms pentavalent tungsten through exposure of sun light for long period of time as mentioned above.

The cause of the formation of pentavalent tungsten is estimated as follows: a resin dispersing cesium tungsten oxide is exposed to light, especially ultraviolet rays, to generate radicals, and the radicals has an effect on tungsten, which turns to pentavalent tungsten. The present inventors take a hint from the above-mentioned estimation to attain the present invention. In order to inhibit the generation of pentavalent tungsten, for example, a layer containing an ultraviolet absorber (a compound having absorption maximum in a wavelength region of 300 to 500nm) is provided outside a heat-ray shielding layer or near-infrared shielding layer containing tungsten oxide and/or composite tungsten oxide, whereby the transparency can be ensured for a long period.

The bluish discoloration of visual light as mentioned previously is resolved by the combination of tungsten oxide and/or composite tungsten oxide for effectively shielding near-infrared rays with a compound having absorption maximum in a wavelength region of 300 to 500nm for suppressing or removing bluish discoloration.

Thus, the present invention is provided by a near-infrared shielding material comprising tungsten oxide and/or composite tungsten oxide and a compound having absorption maximum in a wavelength region of 200 to 500nm.

The embodiments of the near-infrared shielding material according to the present invention are described as follows:
(1) The compound having absorption maximum in a wavelength region of 200 to soon is an ultraviolet absorber, particularly one having absorption maximum in a wavelength region of 250 to 450nm. The compound is capable of effectively absorbing ultraviolet rays which are apt to cause generation of radicals. The layer containing the ultraviolet absorber generally has transmittance of 10% or less at 360nm, 400nm and/or 410nm, preferably has transmittance of 10% or less at 360nm, further preferably at 360nm and 400nm, particularly at 360nm, 400nm and 410nm. The compound is capable of effectively absorbing ultraviolet rays which are apt to cause generation of radicals.
(2) The ultraviolet absorber is a benzotriazole compound, a benzophenone compound and/or a triazine compound. The ultraviolet absorber is capable of effectively absorbing ultraviolet rays which are apt to cause generation of radicals. Otherwise, the ultraviolet absorber is titanium oxide and/or zinc oxide. The ultraviolet absorber is capable of effectively absorbing ultraviolet rays which are apt to cause generation of radicals.
(3) The compound having absorption maximum in a wavelength region of 200 to 500nm is a compound (generally yellow dye or pigment) having absorption maximum in a wavelength region of 300 to 500nm. The compound is useful for suppressing occurrence of bluish discoloration or for removing bluish discoloration.
(4) Examples of the compound having absorption maximum in a wavelength region of 200 to 500nm include Metanil Yellow, Mordant Yellow GT, Palatine Fast Yellow GRN, Benzo Fast Copper RLN, Sirius Yellow GG, Cellitone Fast Yellow G, Rapidogen Yellow G, Rapidogen Yellow GS, Indanthrene Yellow G, Indanthrene Yellow 3GF, Indanthrene Yellow 3R, Indanthrene Yellow 4GK, Indanthrene Yellow 7GK, Algol Yellow GCN, Indanthrene Yellow GF, Indanthrene Yellow 6GD, Anthrasol Yellow V, Immedial Yellow G, Immedial Yellow D, Immedial Yellow GG, Immedial Yellow R extra, Immedial Yellow RR, Quinoline Yellow extra, Naphthol Yellow S and Helindone Yellow CG, Aizenspiron Yellow 3RH, phthalocyanine compounds.
(4) The near-infrared shielding material further contains weather proof resin. The weather proof resin is preferably fluoro resin or silicone resin.
(5) The near-infrared shielding material comprises a layer comprising tungsten oxide and/or composite tungsten oxide and a compound having absorption maximum in a wavelength region of 200 to 500nm, or comprises a layer comprising tungsten oxide and/or composite tungsten oxide and a layer (another layer) comprising a compound having absorption maximum in a wavelength region of 200 to 500nm.
(6) The tungsten oxide and/or composite tungsten oxide is in the form of fine particle.
(7) The fine particle of the oxide has mean particle size of not more than 400nm.
(8) The tungsten oxide is represented by a general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.
(9) The tungsten oxide and/or composite tungsten oxide is treated with silane coupling agent.

Further the present invention is provided by a laminate comprising two substrates and an intermediate film interposed therebetween, the substrates and the intermediate film being integrated by bonding them with each other,
wherein, between the substrate and the intermediate layer, a heat-ray shielding layer and an intermediate layer, or a heat-ray shielding layer, a plastic film and an intermediate layer, or a heat-ray shielding layer, a plastic film, an ultraviolet absorption layer and an intermediate layer are provided, and
the heat-ray shielding layer comprises tungsten oxide and/or composite tungsten oxide, and the intermediate layer and/or the ultraviolet absorption layer comprises a compound (especially ultraviolet absorber) having absorption maximum in a wavelength region of 200 to 500nm.

The laminate is mounted on an automobile such that an intermediate layer containing an ultraviolet absorber is placed outside (i.e., on an outdoor side). Thereby the heat-ray shielding layer can be protected.

The embodiments of the laminate according to the present invention are described as follows:
(1) The embodiments of the near-infrared shielding material can be also applied to the laminate.
(2) The two substrates are both glass plates.
(3) The intermediate layers are a layer (PVB layer) of a composition comprising polyvinyl butyral and/or a layer (EVA layer) of a composition comprising ethylene/vinyl acetate copolymer.
(4) The intermediate layer is a crosslinked layer of a composition comprising ethylene/vinyl acetate copolymer containing an organic peroxide.
(5) The heat-ray shielding layer is a layer comprising resin and composite tungsten oxide dispersed therein.
(6) The heat-ray shielding layer further contains weather proof resin.
(7) The laminate is a laminated glass.

The present invention is provided by a laminate comprising two substrates and an intermediate film interposed therebetween, the substrates and the intermediate film being integrated by bonding them with each other,
wherein one of the two substrates is a glass plate and the other is a plastic film having a hard coat layer on its surface opposite to a surface having the intermediate layer, and
between the intermediate layer and the plastic film, a heat-ray shielding layer is provided, or a heat-ray cut layer and an ultraviolet absorption layer are provided, and
the heat-ray shielding layer comprises tungsten oxide and/or composite tungsten oxide, and the intermediate layer and/or the ultraviolet absorption layer comprises a compound having absorption maximum in a wavelength region of 200 to 500nm.

The embodiments of the laminate according to the present invention are described as follows:
(1) The embodiments of the near-infrared shielding material can be also applied to the laminate.
(2) The intermediate layers are a layer (PVB layer) of a composition comprising polyvinyl butyral and/or a layer (EVA layer) of a composition comprising ethylene/vinyl acetate copolymer.
(3) The intermediate layer is a crosslinked layer of a composition comprising ethylene/vinyl acetate copolymer containing an organic peroxide.
(4) The intermediate layer is a pressure sensitive adhesive layer. The adhesive layer generally is a removal resin layer.
(5) The heat-ray shielding layer is a layer comprising resin and composite tungsten oxide dispersed therein.
(6) The heat-ray shielding layer further contains weather proof resin.
(7) The laminate is a bilayer (film-reinforced glass).
(8) The laminate is a window film.

Further the present invention is provided by an optical filter for display comprising a layer having near-infrared shielding function (which may be referred to as a near-infrared shielding layer hereinafter),
wherein the layer having near-infrared shielding function comprises tungsten oxide and/or composite tungsten oxide, and the said layer or another layer comprises a compound having absorption maximum in a wavelength region of 200 to 500nm;
an optical filter for display comprising an antireflection layer, a layer having near-infrared shielding function , and an adhesive layer,
wherein the layer having near-infrared shielding function comprises tungsten oxide and/or composite tungsten oxide, and the adhesive layer comprises a compound having absorption maximum in a wavelength region of 200 to 500nm (especially 300 to 500nm); it being possible for the above-mentioned two optical filters for display to further comprise a conductive layer;
an optical filter for display comprising a substrate, a conductive layer and an antireflection layer provided in this order on one surface of the substrate, and an adhesive layer and if necessary a layer having near-infrared shielding function provided on the other surface of the substrate,
wherein one of the conductive layer and antireflection layer, or the adhesive layer, or the layer having near-infrared shielding function comprises tungsten oxide and/or composite tungsten oxide, and one of the above-mentioned layers comprises a compound having absorption maximum in a wavelength region of 200 to 500nm (especially 300 to 500nm); and
an optical filter for display comprising a substrate having an antireflection layer thereon, and another substrate a conductive layer thereon, the substrates being bonded with each other,
which comprises tungsten oxide and/or composite tungsten oxide, and a compound having absorption maximum in a wavelength region of 200 to 500nm (especially 300 to 500nm).

The embodiments of each of the optical filters for display according to the present invention are described as follows:
(1) The embodiments of the near-infrared shielding material can be also applied to the optical filter.
(2) An optical filter for display comprising an antireflection layer and a layer having near-infrared shielding function,
   wherein the layer having near-infrared shielding function comprises tungsten oxide and/or composite tungsten oxide and a compound having absorption maximum in a wavelength region of 400 to 500nm;
   an optical filter for display comprising an antireflection layer, a layer having near-infrared shielding function and an adhesive layer,
   wherein the layer having near-infrared shielding function comprises tungsten oxide and/or composite tungsten oxide and the adhesive layer comprises a compound having absorption maximum in a wavelength region of 400 to 500nm; it being possible for the above-mentioned two optical filters for display to further comprise a conductive layer;
   an optical filter for display comprising a substrate (generally transparent substrate), a conductive layer and an antireflection layer provided in this order on one surface of the substrate, and an adhesive layer and a layer having near-infrared shielding function provided on the other surface of the substrate,
   wherein the layer having near-infrared shielding function comprises tungsten oxide and/or composite tungsten oxide, and the adhesive layer comprises a compound having absorption maximum in a wavelength region of 400 to 500nm; and
   an optical filter for display comprising a substrate having an antireflection layer on the one side and a near-infrared shielding layer on the other side, and another substrate having a conductive layer on the one side and an adhesive layer on the other side, the two substrates being bonded with each other such that the near-infrared shielding layer faces the conductive layer,
   which the near-infrared shielding layer comprises tungsten oxide and/or composite tungsten oxide, and the adhesive layer comprises a compound having absorption maximum in a wavelength region of 400 to 500nm.
(3) The near-infrared shielding layer further contains weather proof resin.
(4) Any of the above-mentioned layers (generally the near-infrared shielding layer, the adhesive layer) has neon shielding function.
(5) The conductive layer is a mesh-shaped metal conductive layer. The opening ratio of the conductive layer preferably is 50% or more.
(6) A minimum value of transmittance of near-infrared ray in the wavelength region of 800 to 1,100nm is not more than 30%.
(7) A minimum value of transmittance of visible ray in the wavelength region of 560 to 610nm is not more than 60%.
(8) The b^{*} in the L^{*} a^{*} b^{*} display system (CIE L^{*} a^{*} b^{*} system) is not less than -15.
(9) The substrate is generally a transparent film (especially transparent plastic film).
(10) The optical filter is for plasma display panel.
(11) The optical filter for display is attached to the surface of a glass plate.
(12) In case the compound having absorption maximum in a wavelength region of 200 to 500nm is an ultraviolet absorber, the absorber can be contained in the substrate.
(13) In case the compound having absorption maximum in a wavelength region of 200 to 500nm is an ultraviolet absorber, the following embodiments (a) to c)) are preferred.

(a) The near-infrared shielding layer comprises tungsten oxide and/or composite tungsten oxide, and at least one of the substrate, the antireflection layer and the near-infrared shielding layer comprises at least one ultraviolet absorber.

(b) The optical filter for display comprises a substrate having an antireflection layer on the one side and a near-infrared shielding layer on the other side, and another substrate having a conductive layer on the one side and an adhesive layer on the other side, the two substrates being bonded with each other such that the near-infrared shielding layer faces the conductive layer.

(c) The optical filter for display is attached to a glass plate such that the near-infrared shielding layer faces the glass plate, and a function layer or the antireflection layer is placed outside the near-infrared shielding layer.

Further, a display provided with the optical filter for display of the present invention, and a plasma display panel provided with the optical filter for display of the present invention are also useful.

Furthermore, a display provided with the optical filter for display such that the near-infrared shielding layer faces the display and a function layer or the antireflection layer is placed outside the near-infrared shielding layer; and
a plasma display panel provided with the optical filter for display such that the near-infrared shielding layer faces the panel and a function layer or the antireflection layer is placed outside the near-infrared shielding layer.

### Effect of the Invention

A near-infrared shielding material useful in an optical filter for display or a laminated glass comprises tungsten oxide and/or composite tungsten oxide efficiently shielding near-infrared ray, and a compound having absorption maximum in a wavelength region of 200 to 500nm.

In case the near-infrared shielding material contains an ultraviolet absorber as the compound having absorption maximum in a wavelength region of 200 to 500nm not to oxidize tungsten of the oxide, for example, a laminate such as a laminated glass provided with the near-infrared shielding material is capable of greatly shielding heat-ray and maintaining transparency for a long period of time. Hence, when the laminated glass is used for an automobile, the room inside does not suffer from increase of temperature and hence is comfortable, and further the transparency of the windows can be maintained, whereby a safe drive is ensured. In contrast, when an optical filter for display having the near-infrared shielding material is used, especially as an optical filter for PDP, the resultant displayed image of PDP is good because of effective shielding of near-infrared ray, and the transparency of the filter is maintained for a long period of time whereby the good image is ensured for a long period of time. Particularly, when the near-infrared shielding layer and an ultraviolet absorption layer are provided separately, and the ultraviolet absorption layer is placed outside the near-infrared shielding layer, the above-mentioned effect can be obtained in high level.

Further, the near-infrared shielding material has excellent near-infrared shielding properties and maintains the transparency for a long period of time, and therefore the shield is useful uses (e.g., widow glass, show case) other than the laminated glass and display.

In case the near-infrared shielding material contains a compound such as yellow dye or pigment for the repression and removal of bluish discoloration as the compound having absorption maximum in a wavelength region of 200 to 500nm, and an optical filter for display having the near-infrared shielding material (film) is used, especially in an optical filter for PDP, the resultant PDP shows prevents the malfunction of peripheral equipment and the resultant displayed image of PDP shows natural tones, because of effective shielding of near-infrared ray and repression of bluish discoloration. Thus the optical filter for display of the invention has excellent near-infrared shielding properties and show good display properties.

Further, the near-infrared shielding material has excellent near-infrared shielding properties and show god color reproducibility, and therefore the shield is also useful in uses (e.g., widow glass, show case) other than display.

### Brief Description of the Drawings

[Fig. 1] Fig. 1 is a schematic section view showing an example of embodiments of a laminate according to the present invention.
[Fig. 2] Fig. 2 is a schematic section view showing another example of embodiments of a laminate according to the present invention.
[Fig. 3] Fig. 3 is a schematic section view showing another example of embodiments of a laminate according to the present invention.
[Fig. 4] Fig. 4 is a schematic section view showing an example of embodiments of an optical filter for display according to the present invention.
[Fig. 5] Fig. 5 is a schematic section view showing another example of embodiments of an optical filter for display according to the present invention.
[Fig. 6] Fig. 6 is a schematic section view showing another example of embodiments of an optical filter for display according to the present invention.
[Fig. 7] Fig. 7 is a schematic section view showing another example of embodiments of an optical filter for display according to the present invention.
[Fig. 8] Fig. 8 is a schematic section view showing an example of the conditions that an optical filter for display according to the present invention is attached onto an image displaying surface of plasma display panel as one kind of a display.

### Explanation of reference number

- 10,20,30: Laminate
- 11A, 11B, 21A, 21B, 31: Glass plate
- 12A, 12B, 22A, 22B, 32: Intermediate layer
- 13,23,33: Plastic film
- 14, 24A, 34: Heat-ray shielding layer
- 24B: Ultraviolet absorption layer
- 25: Hard coat layer
- 41, 51A, 51B, 61A, 61B, 71, 81: Transparent film
- 46, 56, 66, 76: Antireflection layer
- 44, 54, 64, 74: Near-infrared shielding layer
- 5 7, 67: Conductive layer
- 68, 78: Adhesive layer

### Description of Preferred Embodiments

A near-infrared shielding material of the present invention basically has a layer including tungsten oxide and/or composite tungsten oxide and a compound having absorption maximum in a wavelength region of 200 to 500nm (may be also referred to as 200 to 500nm absorbing compound hereinafter), or has a layer including tungsten oxide and/or composite tungsten oxide and another layer including the compound.

A laminate of the invention useful in a safety glass such as a laminated glass or a film reinforced glass (e.g., bilayer, window film) has a basic structure consisting of two substrates and an intermediate layer interposed therebetween. In general, the intermediate layer contains tungsten oxide and/or composite tungsten oxide or a compound having absorption maximum in a wavelength region of 200 to 500mn (especially ultraviolet absorber), and other layer provided if desired contains material that the intermediate layer does not contain. These layers correspond to the near-infrared shielding material of the present invention. It is preferred that the intermediate layer contains a compound having absorption maximum in a wavelength region of 200 to 500nm and other layer contains tungsten oxide and/or composite tungsten oxide. A separate layer containing a compound having absorption maximum in a wavelength region of 200 to 500nm may be provided besides the intermediate layer.

The laminate suitable for a laminated glass is explained in detail below by referring to Figures. An example using an ultraviolet absorber as 200 to 500nm absorbing compound, which is preferred embodiment, is explained.

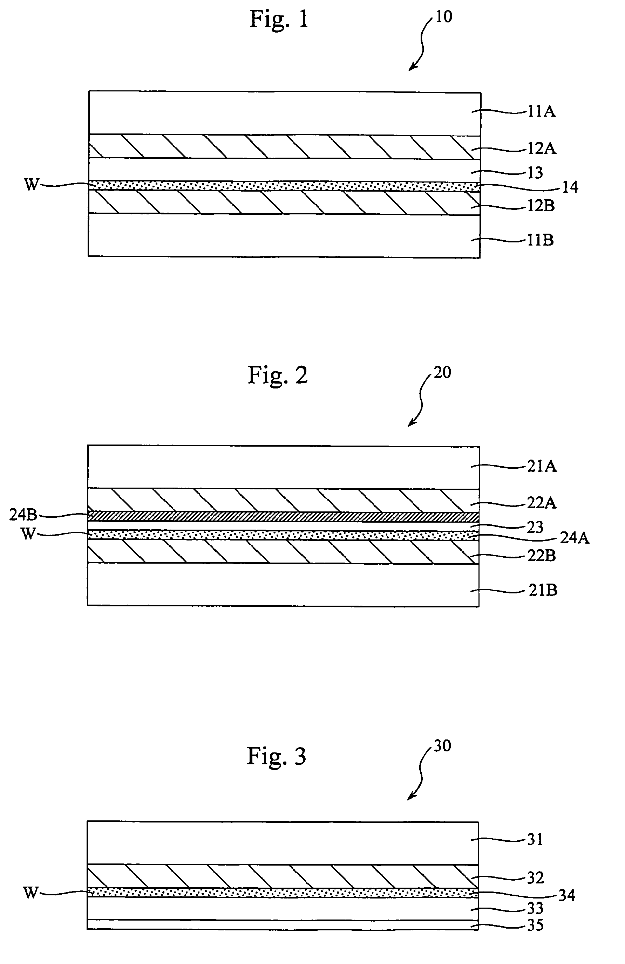

Fig. 1 is a schematic section view showing an example of embodiments of a laminate (laminated glass) according to the present invention. In a laminate 10 of Fig. 1, an intermediate layer 12A containing an ultraviolet absorber, a plastic film 13, a heat-ray shielding layer 14 containing fine particles W of tungsten oxide and/or composite tungsten oxide, an intermediate layer 12B and a glass plate 11B are superposed on a glass plate 11A in this order, and they are integrated with one another. When the laminate is used in a display, it is set up such that a light is incident upon the intermediate layer 12A. The laminate 10 is generally prepared by interposing a plastic film 13 having the heat-ray shielding layer 14 thereon between the two glass plates 11A, 11B through the intermediate layers 12A, 12B and integrating them. The heat-ray shielding layer 14 is generally a layer obtained by dispersing composite tungsten oxide in resin. The intermediate layers 12A, 12B are a layer of a composition including polyvinyl butyral (PVB layer) or a layer of a composition including ethylene/vinyl acetate copolymer (EVA layer). The intermediate layers 12A, 12B each may be a laminate of PVB layer and EVA layer. The EVA layer preferably is a crosslinked layer of a composition including ethylene/vinyl acetate copolymer and an organic peroxide. The plastic film 13 and the heat shielding layer 14 may be provided on the opposite locations from the above locations.

The intermediate layer 12A contains an ultraviolet absorber as mentioned above, and therefore the layer shields ultraviolet ray of an incident light to prevent the ultraviolet ray from entering the heat-ray shielding layer 14. Thereby oxidation number of tungsten of tungsten oxide and/or composite tungsten oxide is scarcely changed.

At least the intermediate layer 12A generally has transmittance of 10% or less at 360nm, 400nm and/or 410nm, preferably has transmittance of 10% or less at 360nm, further preferably at 360nm and 400nm, particularly at 360nm, 400nm and 410nm. The intermediate layer having the transmittance is capable of sufficiently suppressing occurrence of pentavalent tungsten in the heat-ray shielding layer.

The fine particles W of tungsten oxide and/or composite tungsten oxide contained in the heat-ray shielding layer 14 scarcely shield visual ray whereas the fine particles are excellent in function shielding near-infrared ray (especially near-infrared ray at approx. 850 to 1,150nm) to show good heat-ray shielding properties. Although the near-infrared ray at approx. 850 to 1,150nm constitutes a large portion of light given from the sun, the conventional heat-ray shielding material such as ITO or ATO difficulty shields the near-infrared ray. Therefore the laminate of the invention is greatly enhanced in the heat-ray shielding properties.

The heat-ray shielding layer 14 contains fine particles W of tungsten oxide and/or composite tungsten oxide as mentioned above to effectively shields heat-ray, and the intermediate layer 12A containing an ultraviolet absorber which is provided outside of the heat-ray shielding layer 14 (the location at the time of installation) effectively shield ultraviolet ray of the incident light to mostly suppress occurrence of pentavalent tungsten in the (composite) tungsten oxide due to UV ray. Hence, the heat-ray shielding layer does not suffer from bluish discoloration and change of transmittance even for a long term use. It is considered that the change of the oxidation number as mentioned above is caused by radical generated from the resin dispersing (composite) tungsten oxide due to UV ray.

The fine particles W of tungsten oxide and/or composite tungsten oxide may be contained in the intermediate layer 12B, the glass plate 11A, 11B and/or the plastic film 13. In this case, the heat-ray shielding layer 14 may be omitted. Otherwise it is also possible that the plastic film 13 is not used and only the heat-ray shielding layer 14 is provided.

If the glass plate can be bonded to the heat-ray shielding layer 14, the two glass plates11A, 11B are bonded with each other through the heat-ray shielding layer 14 whereby a laminated glass can be prepared. In this case, it is necessary to add an ultraviolet absorber into the glass plate.

Alternatively, use of the plastic film 13 having the heat-ray shielding layer 14 thereon enables a conventional intermediate layer to use.

The heat-ray shielding layer 14 preferably is a layer consisting of weather proof resin and fine particles W of tungsten oxide and/or composite tungsten oxide dispersed therein. The fine particles W of tungsten oxide and/or composite tungsten oxide of the heat-ray shielding layer 14 effectively shields heat-ray, and the weather proof resin dispersing the fine particles W has a property that receives a light to scarcely generate radicals. Therefore, radicals are little supplied to tungsten which is apt to be easily oxidized owing to the radicals and hence tungsten is scarcely oxidized from trivalent to pentavalent. Thus the heat-ray shielding layer suffers from bluish discoloration even for long-term use.

Fig. 2 is a schematic section view showing another example of embodiments of a laminate (laminated glass) according to the present invention. In a laminate 20 of Fig. 2, an intermediate layer 22A, an ultraviolet absorption layer 24B containing an ultraviolet absorber, a plastic film 23, a heat-ray shielding layer 24A containing fine particles W of tungsten oxide and/or composite tungsten oxide, an intermediate layer 22B and a glass plate 21B are superposed on a glass plate 21A in this order, and they are integrated with one another. When the laminate is used in a display, it is set up such that a light is incident upon the intermediate layer 22A. The laminate 20 is generally prepared by interposing a plastic film 23 having an ultraviolet absorption layer 24B containing an ultraviolet absorber (inorganic compounds are preferred) on one side thereof and the heat-ray shielding layer 24A on the other side thereof between the two glass plates 21 A, 21B through the intermediate layers 22A, 22B and integrating them by bonding. The heat-ray shielding layer 24A is generally a layer obtained by dispersing composite tungsten oxide in resin. The intermediate layers 22A, 22B are a layer of a composition including polyvinyl butyral (PVB layer) or a layer of a composition including ethylene/vinyl acetate copolymer (EVA layer). The intermediate layers 22A, 22B may be a laminate of PVB layer and EVA layer. Naturally, the intermediate layers 22A, 22B each may contain an ultraviolet absorber. Resin of the heat-ray shielding layer 24A preferably is weather proof resin.

The ultraviolet absorption layer 24B generally has transmittance of 10% or less at 360nm, 400nm and/or 410nm, preferably has transmittance of 10% or less at 360nm, further preferably at 360nm and 400nm, particularly at 360nm, 400nm and 410nm. The ultraviolet absorption layer having the transmittance is capable of sufficiently suppressing oxidation of the heat-ray shielding layer.

Fig. 3 is a schematic section view showing an example of embodiments of a laminate (film reinforced glass such as bilayer, window film) according to the present invention. In a laminate 30 of Fig. 3, an intermediate layer 32 containing an ultraviolet absorber, a heat-ray shielding layer 34 containing fine particles W of tungsten oxide and/or composite tungsten oxide, a plastic film 33 and a hard coat layer 35, are superposed on a glass plate 31 in this order, and they are integrated with one another. The laminate 30 can be prepared by bonding the plastic film 33 having the heat-ray shielding layer 34 on one side thereof and the hard coat layer 35 on the other side thereof to the glass plate 31 through the intermediate layer 32.

When a light is incident upon the glass plate 31, ultraviolet ray of the light is shielded by the intermediate layer 32 containing an ultraviolet absorber and therefore scarcely attains to the heat-ray shielding layer 34. Thereby excellent heat-ray shielding properties and transparency can be maintained for a long period of time.

As shown in Fig. 2, provided that the intermediate layer does not contain an ultraviolet absorber, it is possible to use a plastic film having an ultraviolet absorption layer containing an ultraviolet absorber (inorganic compounds are preferred) on one side thereof and the heat-ray shielding layer on the other side thereof, or to use a plastic film having an ultraviolet absorption layer and another plastic film having a heat-ray shielding layer. Resin of the heat-ray shielding layer preferably is weather proof resin.

Provided that the heat-ray shielding layer 34 is not used, it is also possible to set the hard coat layer 35 to a heat-ray shielding layer having hard coat properties and containing fine particles W of tungsten oxide and/or composite tungsten oxide. The heat-ray shielding layer can be formed by coating a composition for forming hard coat layer containing composite tungsten oxide fine particles dispersed therein, whereby the composite tungsten oxide fine particles can be easily introduced into the layer.

If the heat-ray shielding layer 34 is capable of bonding to the glass plate and plastic film (i.e., having function of intermediate layer), these can be bonded with each other through the heat-ray shielding layer 34 to form a laminate.

For example, in case the laminate is a bilayer used in a side window of an automobile, the intermediate layer 32 should be an adhesive layer (bonding agent layer). Therefore the intermediate layer 32 is a layer of a composition including polyvinyl butyral (PVB layer) or a layer of a composition including ethylene/vinyl acetate copolymer (EVA layer), or the intermediate layer 32 may be a laminate of PVB layer and EVA layer. The EVA layer preferably is a crossliked layer of a composition including ethylene/vinyl acetate copolymer and an organic peroxide.

In case the laminate is used in a window film, the intermediate layer 32 generally is a pressure sensitive adhesive layer. The pressure sensitive adhesive layer of the invention is a resin layer having removability. Example of the resin includes pressure sensitive acrylic adhesive.

Although the fine particles W of tungsten oxide and/or composite tungsten oxide is generally contained in the heat-ray shielding layer, the fine particles W may be contained in the intermediate layer, the heat-ray shielding layer, the hard coat layer or two or more layers thereof. Therefore, the thickness of the layer(s) varies depending on the above-mentioned embodiment to be adopted, and hence the addition amount of the fine particles W is determined based on the layer (s) to be added. Thus the all cases are satisfied by defining as the addition amount of the fine particles W based on 1 m² of laminate.
In the invention, the addition amount of the fine particles W of tungsten oxide and/or composite tungsten oxide based on 1 m² of laminate is generally in the range of 0.1 to 50g, preferably 0.5 to 20g, more preferably 1 to 10g. By containing the fine particles W in the above-mentioned ranges, the resultant laminate combines excellent heat-ray shielding properties and transparency.

The laminated glass (film-reinforced glass) of the invention replacing one of two glass plates with a plastic film can be designed so as to have appropriate performances such as impact resistance, penetration resistance and transparency, whereby the laminated glass can be used, for example, as a window glass in various vehicles and building, and as a glass in show-window and showcase. Particularly, a window glass mounted on the building is called window film, and a pressure sensitive adhesive layer is generally used as an intermediate layer.
On the other hand, the laminated glass of the invention having glass plates on both sides can be designed so as to have greatly improved impact resistance and penetration resistance, whereby the laminated glass can be used, for example, in various uses including a laminated glass.

The tungsten oxide used in the invention is generally represented by a general formula W_{y}O_{z} wherein W represents tungsten, O represents oxygen, and y and z satisfy the condition of 2.2≤z/y≤2.999, and the composite tungsten oxide has a composition obtained by adding to the tungsten oxide element M (M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I). Hence, free electrons are generated in W_{y}O_{z} even in case of z/y=3, and absorption properties derived from the free electrons develop in the region of near infrared rays, whereby the W_{y}O_{z} is useful as material absorbing near-infrared ray (at approx 1,000nm). In the invention, preferred is composite tungsten oxide.

In the tungsten oxide fine particles of the general formula W_{y}O_{z} wherein W represents tungsten and O represents oxygen, the ratio of oxygen to tungsten is preferably less than 3, and further, y and z satisfy the condition of 2.2≤z/y≤2.999. When z/y is not less than 2.2, occurrence of unnecessary WO₂ crystalline phase in near-infrared absorption material can be prevented and chemical stability of material can be obtained, whereby the tungsten oxide fine particles can be used in effective near-infrared absorption material. In contrast, when z/y is not more than 2.999, free electrons can be generated in the required amount whereby the resultant near-infrared absorbing material has high efficiency.

The composite tungsten oxide is preferably represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3, in view of stability. The alkaline metals are elements in 1 group of Periodical Table of the Elements other than hydrogen, the alkaline-earth metals are elements in 2 group of Periodical Table of the Elements, and the rare-earth elements are Sc, Y and lanthanide elements.

From the viewpoint of enhancement of optical properties and weather resistance, M element is preferably one or more element selected from Cs, Rb, K, Tl, In, Ba, Li, Ca, Sr, Fe and Sn. Further the composite tungsten oxide is preferably treated with a silane coupling agent, the resultant oxide being excellent in dispersing properties and hence excellent in near-infrared shielding properties and transparency.

When x/y which represents the addition amount of M is not less than 0.001, free electrons can be generated in a sufficient amount whereby the resultant near-infrared absorbing material shows sufficient near-infrared shielding effect. The amount of free electrons is increased with increase of the addition amount of the element M, which results in enhancement of near-infrared shielding effect, but the amount of free electrons is saturated when x/y attains approx. 1. In contrast, when x/y is not more than 1, occurrence of an impurities phase in a particles-containing layer can be preferably prevented.

Also in the composite tungsten oxide represented by a general formula MₓW_{y}O_{z}, a value of z/y which represents control of oxygen amount functions in the same manner as in the near-infrared shielding material represented by W_{y}O_{z.} In addition, the amount of free electrons is provided depending on the addition amount of the element M even in case of z/y=3.0, and therefore z/y is preferably 2.2≤z/y≤3.0, more preferably 2.45≤z/y≤3.0.

In case the composite tungsten oxide fine particles have crystal structure of hexagonal crystal, the fine particles are enhanced in transmission in visual region and in absorption in near-infrared region.

In case element M exists in voids of hexagonal shape of the hexagonal crystal, the transmission in visual region and the absorption in near-infrared region are enhanced. In general, the addition of element M having large ion radius brings about the formation of the hexagonal crystal, particularly the addition of Cs, K, Rb, Tl, In, Ba, Sn, Li, Ca, Sr, Fe facilitates the formation of the hexagonal crystal. Naturally, it is effective that even an addition element other than the above-mentioned elements exists in voids of the hexagonal shape formed from WO₆ units, and hence the above-mentioned elements are not restricted.

In case the composite tungsten oxide fine particles have uniform crystal structure of hexagonal crystal, the addition amount of the addition element M is preferably set as a value of x/y to 0.2 to 0.5, more preferably 0.33. It is considered that x/y of 0.33 results in the addition element M being placed in all voids of the hexagonal shape.

Tungsten bronze having tetragonal or cubical crystal other than hexagonal crystal also has near-infrared shielding effect. The absorption position in near-infrared region is apt to vary depending upon the crystal structures, and the absorption position tends to move in the longer wavelength direction in the order of tetragonal<cubical<hexagonal crystal. With the tendency, the absorption in visual region is apt to become small in the order of hexagonal<cubical<tetragonal crystal. Therefore, in use (application) that is required to transmit highly visual light and to shield highly near-infrared ray, it is preferred to use tungsten bronze having hexagonal crystal.

The particle size (mean particle size) of the tungsten oxide and/or composite tungsten oxide fine particles used in the invention is preferably 800nm or less, especially 400nm or less in order to obtain transparency. This is because the small particles having particle size of 800nm or less do not completely shield light by scattering whereby visibility can be ensured in visual region and at the same time transparency is effectively maintained. Particularly, in case transparency in visual region is emphasized, it is preferred to consider scattering caused by particles. Therefore, when the reduction of the scattering of particles is emphasized, the particle size is preferably 200nm or less, especially 100nm or less.

In addition, the surface of the tungsten oxide and/or composite tungsten oxide fine particles of the invention is preferably coated with oxide containing one or more kind of Si, Ti, Zr and Al in view of weather resistance.

The tungsten oxide and/or composite tungsten oxide fine particles of the invention is, for example, prepared as follows:

The tungsten oxide represented by a general formula W_{y}O_{z} and/or the composite tungsten oxide represented by a general formula MₓW_{y}O_{z} can be obtained by subjecting as starting material of a tungsten compound to heat treatment under an inert gas or reducing gas atmosphere.

Examples of the starting material of tungsten compound preferably include tungsten trioxide powder, tungsten oxide hydrate, tungsten hexachloride powder, ammonium tungstate powder, tungsten oxide hydrate powder obtained by dissolving tungsten hexachloride in alcohol and drying it, tungsten oxide hydrate powder obtained by dissolving tungsten hexachloride in alcohol, forming precipitation by addition of water and drying the precipitation, tungsten compound powder obtained by drying an ammonium tungstate aqueous solution, and metal tungsten powder, and one or more of the examples can be used.

In order to facilitate the preparation of the tungsten oxide fine particles, it is more preferred to use tungsten oxide hydrate powder or tungsten compound powder obtained by drying an ammonium tungstate aqueous solution. The preparation of composite tungsten oxide fine particles is more preferably carried out by using an ammonium tungstate aqueous solution or a tungsten hexachloride solution because the solution of starting material easily enables homogeneous mixing of elements to be used. Thus, the tungsten oxide and/or the composite tungsten oxide having the particle size can be obtained by subjecting the above-mentioned material(s) to heat treatment under an inert gas or reducing gas atmosphere.

The composite tungsten oxide represented by a general formula MₓW_{y}O_{z} can be prepared by using a starting material of tungsten oxide containing an element of M or a M-containing compound though in the same manner as the starting material of tungsten oxide of a general formula W_{y}O_{z}. In order to prepare a starting material in which used components are homogeneously mixed in molecular level, solutions of components are preferably mixed with each other, and hence a tungsten compound containing element M is preferably dissolvable in a solvent such as water, or organic solvent. For example, there are mentioned tungstate, chloride, nitrate, sulfate, oxalate or oxide containing element M. However, these are not restricted, and any in the form of solution can be preferably used.

The heat treatment under an inert gas atmosphere is preferably carried out in the condition of 650°C or higher. The starting material heat-treated at 650°C or higher has sufficient coloring power and hence brings about near-infrared shielding fine particles having excellent efficiency. Examples of the inert gas include preferably Ar, N₂. Further, the heat treatment under a reducing gas atmosphere is preferably carried out by heating a starting material at temperature of 100 to 650°C under a reducing gas atmosphere and heating at temperature of 650 to 1200°C under an inert gas atmosphere. Example of the reducing gas preferably includes H₂, but is not restricted to. In case H₂ is used as the reducing gas, a composition of the reducing gas has preferably not less than 0.1 % by volume of H₂, more preferably not less than 2% by volume of H₂. Use of not less than 0.1 % by volume of H₂ enables the reduction to effectively promote.

The material powder reduced with hydrogen contains magnelli phase and shows excellent near-infrared shielding properties, and hence the material powder can be used without modification. However, since hydrogen contained in tungsten oxide is unstable, its application may be restricted in view of weather resistance. By subjecting the tungsten oxide containing hydrogen to heat treatment at temperature of 650°C or higher under an inert gas atmosphere, further stable near-infrared shielding fine particles can be obtained. Though the atmosphere in the heat treatment is not restricted, the atmosphere preferably includes N₂ or Ar. The heat treatment at temperature of 650°C or higher brings about formation of magnelli phase in the near-infrared shielding fine particles whereby weather resistance is enhanced.

The composite tungsten oxide of the invention has been preferably subjected to surface treatment by a coupling agent such as a silane coupling agent, a titanate coupling agent or an aluminum coupling agent. The silane coupling agent is preferred. Thereby the composite tungsten oxide becomes to have excellent compatibility with binder of an intermediate layer, a hard coat layer, a heat-ray shielding layer, which results in improvement of various properties such as transparency, heat-ray shielding properties.

Examples of the silane coupling agents include γ-chloropropylmethoxysilane, vinyltriethoxysilane, vinyl-tris(β-methoxyethoxy)silane, γ-methacryloxypropylmethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane, trimethoxyacrylsilane. Preferred are vinyltris(β-methoxyethoxy)silane, γ-methacryloxypropylmethoxysilane, vinyltriacetoxysilane, trimethoxyacrylsilane. The silane coupling agents can be used singly, or in combination of two or more kinds. The content of the silane coupling agent is preferably in an amount of 5 to 20 parts by weght based on 100 parts by weight of the fine particles.

The heat-ray shielding layer or near-infrared shielding layer of the invention is generally a layer obtained by dispersing the above-mentioned fine particles of tungsten oxide and/or composite tungsten oxide in resin.

As the resin, conventional thermoplastic resins, thermosetting resins and ultraviolet curable resins can be mentioned. Examples of the resin include synthetic resins such as polyester resin, acrylic resin, epoxy resin, urethane resin, silicone resin. Thermoplastic resins and ultraviolet curable resins are preferred, especially ultraviolet curable resins. Ultraviolet curable resins are preferred because they can be cured for short time period and hence have excellent productivity. As materials for ultraviolet curable resins, those shown in a hard coat layer described later can be used.

As resin for the heat-ray shielding layer or near-infrared shielding layer of the invention, also weather proof resin is preferably used.

The weather proof resin generally is resin including bond having bonding energy of 80kcal/mol or more, preferably of 100kcal/mol or more. For example, a bond Si-O is 108 kcal/mol, and a bond C-F is 116 kcal/mol.

Examples of the weather proof resin include fluoro resin, silicone resin, olefin resin, acrylic resin. Preferred are fluoro resin, silicone resin.

Examples of the fluoro resin include polytetrafluoroethylene (PTFE), tetrafluoroethylene/hexafluoropropylene copolymer (FEP), tetrafluoroethylene/perfluoroalkyl vinylether copolymer (PFA), polyvinylidene fluoride (PVDF), polychlorotrifluoroethylene (PCTFE), tetrafluoroethylene/ethylene copolymer (ETTE), fluoroethylene vinyl ether resin (FEVE) and ethylene/chlorotrifluoroethylene copolymer (ECTFE), and polymer A having the following structure:

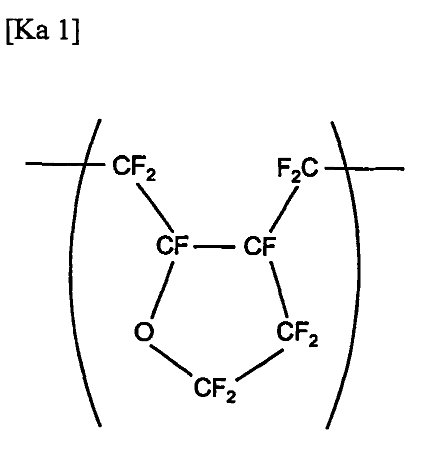

wherein n is 10 to 1,000. Of these resins, the polymer A and fluoroethylene vinyl ether resin (FEVE) are preferred. These (co)polymers may have functional group(s) (e.g., alkoxysilyl group, hydroxyl group, amino group, imino group, (meth)acryloyloxy group, epoxy group, carboxyl group, sulfonyl group, acrylate-containing isocyanurate group, sulfate group). Examples of commercially available fluoro resin include Cytop available from Asahi Glass Co., Ltd., Zeful available from Daikin Industries, Ltd., Optool available from Daikin Industries, Ltd. These resins are thermoplastic, thermosetting or photo (UV) curable resin. When they are cured, if necessary curing agent or crosslinker is preferably used. For example, in case of UV curing, it is preferred to use polymerizable monomers and initiators, etc. which are used in the formation of hard coat layer.

Examples of the silicone resin include straight silicone varnish and modified silicone varnish. The straight silicone varnish is generally prepared by hydrolysis of phenyltrichlorosilane, diphenyldichlorosilane, methyltrichlorosilane or dimethyldichlorosilane. In case of using the varnish, it is coated and then cured at 100°C or higher. The modified silicone varnish is generally prepared by reacting silicone varnish with resin such as alkyd, polyester, acryl resin, epoxy resin. Preferred examples of commercially available silicon resin include silicone varnish KR series available from Shin-Etsu Chemical Co., Ltd.

Examples of the olefin resin include polyethylene, polypropylene, chlorinated polyethylene.

Examples of the acrylic resin include thermoplastic resins such as acrylonitrile/ethylene propylene rubber/styrene copolymer (AES) and acrylonitrile/styrene/acrylate copolymer (ASA), or thermosetting resins (e.g., self-curable resin, or crosslinking types using polyisocyanate, amino resin, polyester or epoxy resin).

The heat-ray shielding layer (generally also near-infrared shielding layer) can be obtained by applying a coating liquid obtained by dispersing fine particles of tungsten oxide and/or composite tungsten oxide in resin in resin and if necessary organic solvent onto a substrate such as a plastic film, and drying the coated layer, and if necessary curing the layer by heat or UV. In case the (composite) tungsten oxide fine particles are introduced into resin, it is preferred to preliminarily knead the resin composition containing (composite) tungsten oxide fine particles by using a roll mill, a sand mill, or an attritor mill and then disperse the (composite) tungsten oxide fine particles.

Examples of the organic solvent include aromatic hydrocarbon such as toluene, xylene, ketones such as methyl ethyl ketone, methyl isobutyl ketone, esters such as ethyl acetate, butyl acetate, and alcohols such as isopropyl alcohol.

The heat-ray shielding layer preferably has 10 to 1,000 parts by weight, further preferably 10 to 800 parts by weight, especially 10 to 600 parts by weight, of (composite) tungsten oxide fine particles based on 100 parts by weight of binder resin. The thickness of the heat-ray shielding layer is generally in the range of 0.1 to 50µm, preferably 0.1 to 10µm, especially 0.1 to 5µm.

The glass plate of the invention generally is silicate glass. In the reinforced glass, the thickness of the glass plate is varied depending on where the reinforced glass of the invention is used. For example, in case the film-reinforced glass is used as a side window or inserted glass of automobile, the glass plate need not have the thickness of windshield and therefore its thickness is generally in the range of 0.1 to 10 mm, preferably 0. 3 to 5 mm. The above-mentioned one glass plate is tempered in heat or chemical resistance.

In the laminated glass of the invention having glass plates on both sides, which is suitable for a windshield of automobile, the thickness of the glass plate generally is in the range of 0.5 to 10mm, preferably 1 to 8mm.

When the intermediate layer used for the laminate of the invention is an adhesive layer, the intermediate layer generally is an EVA layer, a PVB layer or a laminate thereof. The intermediate layer (if two layers, at least one layer) preferably contains an ultraviolet absorber as the 200 to 500nm absorbing compound. In the installation of the laminate, outside intermediate layer preferably contains the ultraviolet absorber.

The ultraviolet absorber having absorption maximum in a wavelength region of 200 to 500nm preferably has absorption maximum in a wavelength region of 250 to 450nm, especially 320 to 420nm. The absorber is capable of effectively absorbing ultraviolet rays which are apt to cause generation of radicals.

The layer containing the ultraviolet absorber (generally the intermediate layer, the ultraviolet shielding layer on the plastic film) generally has transmittance of 10% or less at 360nm, 400nm and/or 410nm. The ultraviolet absorber is preferably used such that the layer has transmittance of 10% or less at 360nm, further preferably at 360nm and 400nm, particularly at 360nm, 400nm and 410nm. Thereby ultraviolet rays which are apt to cause generation of radicals can be effectively absorbed.

As the ultraviolet absorber, any inorganic compounds and any organic compounds can be used. Examples of the organic compounds preferably include benzophenone compounds, benzotriazole compounds and triazine compounds. The benzophenone compounds are preferred from the viewpoint of inhibition of yellowing.

Preferred examples of the benzophenone compound include 2,4-dihydroxybenzophenone, 2-hydroxy-4-methoxybenzophenone, 2-hydroxy-4-dodecyoxybenzophenone, 2-hydroxy-4-n-octylbenzophenone, 2,2',4,4'-tetrahydroxybenzophenone, and 2,2'-dihydroxy-4,4'-dimethoxybenzophenone. Preferred are 2-hydroxy-4-n-octylbenzophenone and 2,2'-dihydroxy-4,4'-dimethoxybenzophenone. Particularly preferred is 2,2'-dihydroxy-4,4'-dimethoxybenzophenone.

Examples of the benzotriazole compounds include 2-(2-hydroxy-5-butylphenyl)-2H-benzotriazole, 3-(2H- benzotriazole-2-yl)-5-(1,1-dhnethylethyl)-4-hydroxy benzenepropanoate, 2-(2H-benzotriazole-2-yl)-4,6-bis(1-methy-1-phenyllethyl)phenol.

Examples of the triazine compounds include 2-(4,6-dimethylphenyl)-1,3,5-(triazine-2-yl)-5-hydroxyphenyl, 2-(2,4-dihydroxyphenyl)-4,6-bis-(2,4-dimethylphenyl)-1,3,5-triazine, 2-(2-hydroxy-4-butoxyphenyl)- 6- (2,4-di butoxyphenyl)-1,3,5-triazine.

The intermediate layer generally contains the ultraviolet absorber in an amount of 0.1 to 20 parts by weight, preferably 0.1 to 10 parts by weight, especially 0.5 to 5 parts by weight based on 100 parts by weight of resin (generally EVA, PVB).

Examples of inorganic compounds used as the ultraviolet absorber generally include titanium oxide and/or zinc oxide. Preferred is titanium oxide, especially rutile type titanium oxide (generally titanium dioxide). These compounds have properties absorbing ultraviolet and reflecting ultraviolet as well, and therefore shows ultraviolet shielding effect by both the properties.

The inorganic compound is used in the form of particle. The mean particle size preferably is in the range of 0.01 to 100µm, especially 0.01 to 0.2µm.

Though the inorganic compound may be introduced into an intermediate layer when it is used, it is preferred that an ultraviolet absorption layer containing the inorganic compound is provided as another thin layer as shown in Fig. 2. The thin layer generally contains the inorganic compound in an amount of 10 to 1,000 parts by weight, preferably 20 to 500 parts by weight, especially 30 to 300 parts by weight, based on 100 parts by weight of resin. The resins used in the heat-ray shielding layer can be used in the thin layer. The thickness generally is in the range of 0.5 to 10µm, preferably 0.5 to 5µm.

In case the inorganic compound is introduced into the intermediate layer, the inorganic compound is generally used in an amount of 0.1 to 10 parts by weight, preferably 0.1 to 5 parts by weight, especially 0.2 to 2 parts by weight, based on 100 parts by weight of resin.

The organic compound thin layer (ultraviolet absorption layer) generally contains the organic compound in an amount of 0.5 to 20 parts by weight, preferably 1 to 10 parts by weight based on 100 parts by weight of resin. The resins used in the heat-ray shielding layer can be used in the thin layer. The thickness generally is in the range of 0.2 to 50µm, preferably 0.5 to 20µm.

A PVB resin composition constituting a PVB layer as the intermediate layer generally includes PVB resin, a plasticizer, an UV absorber, etc. The PVB resin has preferably 70 to 95 weight % of vinyl acetal unit and 1 to 15 weight % of vinyl acetate unit, and average polymerization degree of 200 to 3,000, preferably 300 to 2,500.

Examples of the plasticizers of the PVB composition include organic plasticizers such as monobasic acid ester and polybasic acid ester; and plasticizers derived from phosphoric acid.

Examples of the monobasic acid esters preferably include esters obtained by reaction of an organic acid such as butyric acid, isobutyric acid, caproic acid, 2-ethylbutyric acid, heptanoic acid, n-octylic acid, 2-ethylhexylic acid, pelargonic acid (n-nolylic acid) or decylic acid with triethylene glycol, and particularly preferred are triethylene glycol -di-2-ethylbutylate, triethylene glycol-di-2-ethylhexoate, triethylene glycol -di-capronate, triethylene glycol-di-n-octoate. Further esters obtained by reaction of the organic acid with tetraethylene glycol or tripropylene glycol can be also used.

Examples of the polybasic acid ester plasticizers preferably include esters of an organic acid such as adipic acid, sebacic acid or azelaic acid with a linear or branched alcohol of 4 to 8 carbon atoms, and particularly preferred are dibutyl sebacate, dioctyl azelate, dibutylcarbitol adipate.

Examples of the phosphoric acid derived plasticizers include tributoxyethyl phosphate, isodecylphenyl phosphate, triisopropy phosphate.

In the PVB resin composition, use of a reduced amount of the plasticizer shows poor film-forming property, while use of an increased amount of plasticizer lowers durability under elevated temperature. Therefore the PVB resin composition preferably contains the plasticizer in an amount of 5 to 60 parts by weight, particularly 10 to 40 parts by weight based on 100 parts by weight of polyvinyl butyral resin.

The PVB resin composition contains, in addition to the above, benzophenone compounds, hindered amine compounds. The benzophenone compounds are preferred because of inhibition of yellowing.

Further, the PVB resin composition preferably may contain alkali metal salt or alkali earth metal salt of fatty acid, which are generally used as an adhesion adjuster.

Examples of the alkali earth metal salts of fatty acids include magnesium formate, magnesium acetate, magnesium lactate, magnesium stearate, magnesium octylate, calcium formate, calcium acetate, calcium lactate, calcium stearate, calcium octylate, barium formate, barium acetate, barium lactate, barium stearate and barium octylate; and examples of the alkali metal salts of fatty acids include potassium formate, potassium acetate, potassium lactate, potassium stearate, potassium octylate, sodium formate, sodium acetate, sodium lactate, sodium stearate and sodium octylate.

The PVB resin composition may further contain additives such as a stabilizer and an antioxidant for keeping the qualities.

In EVA used in the EVA resin composition constituting the EVA layer, the content of vinyl acetate recurring unit preferably is in the range of 23 to 38% by weight, especially 23 to 28% by weight. When the content is less than 23% by weight, the resin cured at high temperature does not show satisfactory transparency. On the other hand, when the content is more than 38 % by weight, the resin is apt not to satisfy impact resistance and penetration resistance required in the glass for prevention of crimes. The ethylene-vinyl acetate copolymer preferably has Melt Flow Index (MFI) of 4.0 to 30.0g/10min., especially 8.0 to 18.0g/10min. Thereby a preliminary pressure bonding becomes easy.

The EVA resin composition includes EVA, an organic peroxide (crosslinker) and an ultraviolet absorber, and further can contain various additives such as a crosslinking auxiliary, an adhesion promoter and a plasticizer, if necessary.

Examples of the ultraviolet absorber include benzophenone compounds, hindered amine compounds. The benzophenone compounds are preferred because of inhibition of yellowing.

In the invention, any materials that can be decomposed at a temperature of not less than 100°C to generate radical(s) can be employed as the organic peroxide. The organic peroxide is selected in the consideration of film-forming temperature, condition for preparing the composition, curing (bonding) temperature, heat resistance of body to be bonded, storage stability. Especially, preferred are those having a decomposition temperature of not less than 70°C in a half-life of 10 hours.

Examples of the organic peroxides include 2,5-dimethylhexane-2,5-dihydroperoxide, 2,5-dimethyl-2,5-(t-butylperoxy)hexane-3-di-t-butylperoxide, t-butylcumyl peroxide, 2,5-dimethyl-2,5-di(t-butylperoxy)hexane, dicumyl peroxide, α,α'-bis(t-butylperoxyisopropyl)benzene, n-butyl-4,4-bis(t-butylperoxy)valerate, 1,1-bis(t-butylperoxy)cyclohexane, 1,1-bis(t-butylperoxy)-3,3,5-trimethylcyclohexane, t-butylperoxybenzoate, benzoyl peroxide, t-butylperoxyacetate, methyl ethyl ketone peroxide, 2,5-dimethylhexyl-2,5-bisperoxybenzoate, butyl hydroperoxide, p-menthane hydroperoxide, p-chlorobenzoyl peroxide, hydroxyheptyl peroxide, chlorohexanone peroxide, octanoyl peroxide, decanoyl peroxide, lauroyl peroxide, cumyl peroxyoctoate, succinic acid peroxide, acetyl peroxide, m-toluoyl peroxide, t-butylperoxyisobutylate and 2,4-dichlorobenzoyl peroxide.

The EVA layer preferably contains acryloxy group-containing compounds, methacryloxy group-containing compounds and/or epoxy group-containing compounds for improvement or adjustment of various properties of the layer (e.g., mechanical strength, adhesive property (adhesion), optical characteristics such as transparency, heat resistance, light-resistance, cross-linking rate), particularly for improvement mechanical strength.

Examples of the acryloxy and methacryloxy group containing compounds include generally derivatives of acrylic acid or methacrylic acid, such as esters and amides of acrylic acid or methacrylic acid. Examples of the ester residues include linear alkyl groups (e.g., methyl, ethyl, dodecyl, stearyl and lauryl), a cyclohexyl group, a tetrahydrofurfuryl group, an aminoethyl group, a 2-hydroxyethyl group, a 3-hydroxypropyl group, 3-chloro-2-hydroxypropyl group. Further, the esters include esters of acrylic acid or methacrylic acid with polyhydric alcohol such as ethylene glycol, triethylene glycol, polypropylene glycol, polyethylene glycol, trimethylol propane or pentaerythritol.

Example of the amide includes diacetone acrylamide.

Examples of polyfunctional compounds (crosslinking auxiliaries) include esters of plural acrylic acids or methacrylic acids with polyhydric alcohol such as glycerol, trimethylol propane or pentaerythritol; and further triallyl cyanurate and triallyl isocyanurate.

Examples of the epoxy group containing compounds include triglycidyl tris(2-hydroxyethyl)isocyanurate, neopentylglycol diglycidyl ether, 1,6-hexanediol diglycidyl ether, allyl glycidyl ether, 2-ethylhexyl glycidyl ether, phenyl glycidyl ether, phenol(ethyleneoxy)₅glycidyl ether, p-tert-butylphenyl glycidyl ether, diglycidyl adipate, diglycidyl phthalate, glycidyl methacrylate and butyl glycidyl ether.

In the invention, a silane coupling agent can be used for enhancing the adhesive strength between the EVA layer and the glass plate or plastic film.

Examples of the silane coupling agents include γ-chloropropylmethoxysilane, vinyltriethoxysilane, vinyl-tris(β-methoxyethoxy)silane, γ-methacryloxypropylmethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane. The silane coupling agents can be used singly, or in combination of two or more kinds. The content of the silane coupling agent is preferably in an amount of not more than 5 weight by part based on 100 parts by weight of EVA.

As the plasticizer, polybasic acid esters and polyhydric alcohol esters are generally employed although the plasticizer can be used without any restriction. Examples of the esters include dioctyl phthalate, dihexyladipate, triethylene glycol-di-2-ethylbutylate, butyl sebacate, tetraethylene glycol heptanoate and triethylene glycol dipelargonate. The plasticizer can be used singly, or in combination of two or more kinds. The content of the plasticizer is generally in an amount of not more than 5 parts by weight based on 100 parts by weight of EVA.

In case the intermediate layer used in the composite of the invention is a pressure-sensitive adhesive layer, an EVA layer, a PVB layer or a thermoplastic resin layer is used. The EVA layer or PVB layer is required to set to its composition so as to have removal property and tackiness. For example, the EVA layer generally uses EVA having high vinyl acetate content, and a reduced amount of crosslinker (organic peroxide). Examples of the other thermoplastic resin include acrylic resin, polyurethane resin, epoxy resin.

The EVA layer of the invention can be prepared, for example, by subjecting a composition including EVA, an organic peroxide, an UV absorber, etc., to a conventional molding process such as extrusion molding or calendaring to form a sheet-shaped material. Further the PVB layer of the invention can be similarly prepared, for example, by subjecting a composition including PVB, an UV absorber, etc., to a conventional molding process such as extrusion molding or calendaring to form a sheet-shaped material. In case fine particles of (composite) tungsten oxide are introduced into the intermediate layer, the fine particles are added into the composition, which is usually processed as mentioned above, and then subjected to forming process. When the fine particles are required to be sufficiently dispersed, the composition may be dispersed in advance by using a roll mill, a sand mill, an attritor mill.

Otherwise, the sheet-shaped material can be also obtained by dissolving the composition in a solvent to form a solution and coating and drying the solution on an appropriate support by means of an appropriate coater to form a coated layer. When the composition containing the fine particles is coated as above, the composition is preferably dispersed in advance by using a roll mill, a sand mill, an attritor mill.

Though the PVB layer and EVA layer are formed as a resin film respectively, a PVB and EVA composite resin film may be formed by coextrusion of PVB and EVA resins. Further one composition may be coated on the resin film of the other composition, for example, the EVA composition may be coated on the resin film of the PVB composition by means of an appropriate coater to form a two-layered film. A three-layered intermediate film can be also formed in the same manner as above.

The preparation of the laminated glass as the laminate of the invention can be started, for example, by preparing a plastic film on which a heat-ray shielding layer is formed. The plastic film having heat-ray shielding layer can be obtained by coating and drying a coating liquid including resin and fine particles of (composite) tungsten oxide dispersed therein. When the fine particles are dispersed in the resin, they are dispersed in advance by using a roll mill, a sand mill, an attritor mill.

The preparation of the laminated glass as the laminate of the invention is carried out, for example, by preparing an EVA resin film, interposing the plastic film having the heat-ray shielding layer between two glass plates through the EVA resin film to form a laminate, and degassing the laminate and then pressing the laminate under heating to be bonded and integrated. The laminate can be obtained, for example, by vacuum package system or nip rollers system. The lamination can be carried out by pressure bonding according to the nip rollers system because of softness of EVA film, which renders the preparation of the laminate easy. The temperature of the nip rollers is preferably in the range of 80 to 140°C.

In the preparation of the laminated glass (laminate), the EVA layer is generally crosslinked by heating at 100 to 150°C (especially approx. 130°C) for 10 minutes to one hour. The above crosslinking is carried out by degassing the laminated film inserted between two glass plates, and preliminarily bonding them to each other, for example, under pressure at 80 to 120°C, and then heating them at 100 to 150°C (especially approx. 130°C) for 10 minutes to one hour. The crosslinked laminate is generally cooled at room temperature. The cooling is preferably conducted rapidly.

As described above, one of glass plates of the laminate of the invention may be substituted with a plastic film whereby a film-reinforced glass can be obtained. Examples of the plastic films used in the invention include polyethylene terephthalate (PET) film, polyethylene naphthalate (PEN) film or polyethylene butyrate film. Especially preferred is PET film.

A hard coat layer can be provided on the plastic film to enhance scratch resistance of surface. As a resin for forming the hard coat layer, UV (ultraviolet) curable resin or thermosetting resin can be generally employed. The thickness of the hard coat layer is generally in the range of 1 to 50µm, preferably 3 to 20µm.

Known UV (ultraviolet) curable resin can be employed in the invention. Further, any low molecular and polyfunctional resins suitable for forming a hard coat layer are usable without restriction. In general, UV curable resin used in a hard coat layer for an optical filter mentioned hereinbelow can be usually used.
Examples of materials for the UV curable resin preferably include oligomers such as urethane oligomer, polyester oligomer and epoxy oligomer which have plural ethylenically double bonds; and mono- or poly-functional oligomers (monomers) such as pentaerythritol tetraacrylate (PETA), pentaerythritol tetramethacrylate and dipentaerythritol hexaacrylate (DPEHA). The UV curable resin generally consists of oligomer, photoinitiator and if necessary reactive diluent (monomer), and further various additives can be used. Examples of the reactive diluents include those mentioned in acryloxy group-containing compounds, methacryloxy group-containing compounds and/or epoxy group-containing compounds used as materials of the intermediate film. Known photoinitiators are can be used in the invention.

The oligomers, reactive diluents and photoinitiators can be each used singly, or in combination of two or more kinds. The content of the diluent is preferably in an amount of 0.1 to 10 part by weight, particularly 0.5 to 5 parts by weight based on 100 parts by weight of UV curable resin. The content of the photoinitiator is preferably in an amount of not more than 5 parts by weight based on 100 parts by weight of UV curable resin.

Examples of the thermosetting resin include reactive acrylic resin, melamine resin, epoxy resin. The above-mentioned UV curable resin can be used as thermosetting resin.

In case a hard coat layer is formed by using UV curable resin, UV curable resin itself or a solution having an appropriate resin concentration obtained by diluting UV curable resin with a solvent is coated on an appropriate film by an appropriate coater, and if desired the coated layer is dried, and then the coated layer is exposed to a UV rays of a UV lamp directly or through a strippable sheet for a few seconds to a few minutes to form a hard coat layer. If necessary, after degassing under vacuum the coated layer is exposed. Examples of the UV lamp include high-pressure, medium-pressure and low-pressure mercury lamps, and a metal halide lamp. When the fine particles of (composite) tungsten oxide are dispersed in the hard coat layer, a composition (or UV curable resin) containing the fine particles for forming the hard coat layer are preferably kneaded in advance by using a roll mill, a sand mill, an attritor mill and then the fine powders are dispersed.

In case a hard coat layer is formed by using thermosetting resin, a solution of thermosetting resin in a solvent is coated on an appropriate film by an appropriate coater, and if desired a strippable sheet is provided on the coated layer, and then the coated layer is, after degassing by a laminator, cured by heating and heat-bonded under pressure. When the strippable sheet is not used, it is preferred that before heat-bonding, the coated layer is dried for approx. 60 seconds to vaporize the solvent until the coated layer comes to be tacky free. When the strippable sheet is used, too, it is preferred that the coated layer is dried a little and then the strippable sheet is provided.

The preparation of the film reinforced glass as the laminate of the invention is carried out, for example, by first forming the hard-coat layer and/or the heat-ray shielding layer on the plastic film by coating, and interposing the plastic film having he hard-coat layer and/or the heat-ray shielding layer on a glass plate through the EVA resin film to form a laminate, and degassing the laminate and then pressing the laminate under heating to be bonded and integrated. The laminate can be obtained, for example, by vacuum package system or nip rollers system. The lamination can be carried out by pressure bonding according to the nip rollers system because of softness of EVA film, which renders the preparation of the laminate easy. The temperature of the nip rollers is preferably in the range of 80 to 140°C.

In the preparation of the laminate, the EVA layer is generally crosslinked by heating at 100 to 150°C (especially approx. 130°C) for 10 minutes to one hour. The above crosslinking is carried out by degassing the laminated film inserted between two glass plates, and preliminarily bonding them to each other, for example, under pressure at 80 to 120°C, and then heating them at 100 to 150°C (especially approx. 130°C) for 10 minutes to one hour. The crosslinked laminate is generally cooled at room temperature. The cooling is preferably conducted rapidly.

A transparent conductive layer comprising metal and/or metal oxide may be formed on a surface of the glass plate of the laminated glass of the invention.

A barrier layer can be formed on the side face of the resultant laminated glass. The barrier layer has generally a thickness of 0.1 to 20µm, preferably 1 to 10µm.

The resultant laminated glass of the invention can be employed in the following uses: an inserted glass, a side window (door glass) and a rear glass in an automobile; a door glass of a door leaf for passenger to go in or out, a door glass for chamber, and a window glass in a railway vehicle (e.g., corridor train, express train, special train, sleeping car); a window glass and a door glass in constructions such as building; a showcase for display; and a glass of show window. The laminated glass is preferably employed as a side window, inserted glass for side window and rear glass in an automobile, and a window glass in a railway vehicle, especially as a side window and inserted glass for a door glass in an automobile.

Subsequently, an optical filter for display of the present invention is explained with reference to the drawings.

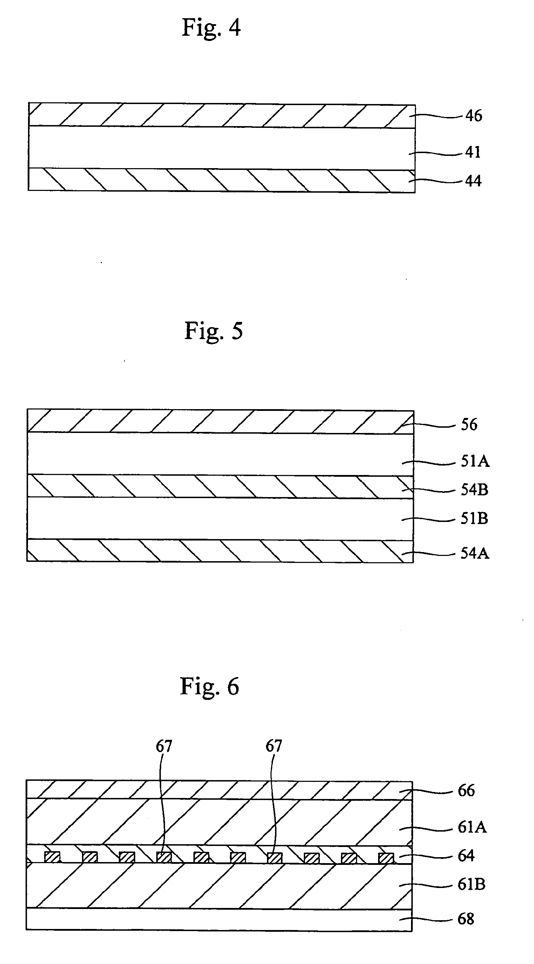

Fig. 4 is a schematic section view showing an example of embodiments of the optical filter for display of the invention.

In the optical filter, an antireflection layer 46 is formed on an one side of a transparent film 41 and a near-infrared shielding layer 44 is formed on the other side (back side) of the transparent film 41. In general, the near-infrared shielding layer 44 contains fine particles W of tungsten oxide and/or composite tungsten oxide and a compound having absorption maximum in a wavelength region of 200 to 500nm (200 to 500nm absorbing compound), or the near-infrared shielding layer 44 contains tungsten oxide and/or composite tungsten oxide and another layer contains a compound having absorption maximum in a wavelength region of 200 to 500nm (200 to 500nm absorbing compound).

In case the 200 to 500nm absorbing compound is an ultraviolet absorber, it is general that the near-infrared shielding layer 44 contains tungsten oxide and/or composite tungsten oxide and the antireflection layer 46 contains the ultraviolet absorber. The antireflection layer 46 faces outward (air side), when it is attached to a display.

In the optical filter, the near-infrared shielding layer 44 is configured to have tackiness, and by using this layer, the filter may be bonded to other optical film or a surface of a display. Otherwise an adhesive layer may be provided on the near-infrared shielding layer 44.

When the optical filter for display having the near-infrared shielding layer is used especially as an optical filter for PDP, near-infrared ray is effectively shielded in the displaying image of the resultant PDP and further ultraviolet ray is effectively shielded by the antireflection layer. Therefore, the tungsten oxide and/or composite tungsten oxide is not oxidized whereby the transparency of the filter can be maintained for a long period of time and hence the good displaying image is ensured for a long period of time.

In case the 200 to 500nm absorbing compound is a compound having absorption maximum in a wavelength region of 300 to 500nm, especially 400 to 500 (e.g., yellow dyes or pigments), it is general that the near-infrared shielding layer 44 contains both of the tungsten oxide and/or composite tungsten oxide and the compound having absorption maximum in a wavelength region of 300 to 500nm, or the near-infrared shielding layer 44 contains the tungsten oxide and/or composite tungsten oxide and another layer (e.g., adhesive layer) contains the compound having absorption maximum in a wavelength region of 300 to 500nm. The near-infrared shielding layer 44 is configured to have tackiness, and by using this layer, the filter may be bonded to other optical film or a surface of a display. Depending upon use, the near-infrared shielding layer 44 may be omitted.

Fig. 5 is a schematic section view showing another example of embodiments of the optical filter for display of the invention.

In the optical filter, an antireflection layer 56 is formed on one side of a transparent film 51A and a plastic film 51B having a near-infrared shielding layer 54A and an ultraviolet absorption layer 54B is adhered to the other side (back side) of the transparent film 51A. The other side of the transparent film 51A is bonded to the ultraviolet absorption layer 54B by an adhesive. In the filter, the near-infrared shielding layer 54A contains fine particles W of tungsten oxide and/or composite tungsten oxide and the ultraviolet absorption layer 54B (e.g., hard coat layer) contains an ultraviolet absorber (preferably inorganic compounds such as titanium oxide).

In the optical filter, the near-infrared shielding layer 54A is configured to have tackiness, and by using this layer, the filter may be bonded to other optical film or a surface of a display. Otherwise an adhesive layer may be provided on the near-infrared shielding layer 54A. Depending upon use, the near-infrared shielding layer 54A may be omitted.

When the optical filter for display having the near-infrared shielding layer is used especially as an optical filter for PDP, near-infrared ray is effectively shielded in the displaying image of the resultant PDP, which results in good image, and therefore, the transparency of the filter can be maintained for a long period of time and hence the good displaying image is ensured for a long period of time.

Fig. 6 is a schematic section view showing an example of embodiments of the optical filter for display of the invention. In the optical filter, an antireflection layer 66 is formed on one side of a transparent film 61A and a near-infrared shielding layer 64 is formed to the other side (back side) of the transparent film 61A, thereby resulting in a laminate (same as in Fig. 4). On the other hand, a mesh-shaped conductive layer 67 is formed on one side of a transparent film 61B and an adhesive layer 68 containing neon shielding dye is formed to the other side (back side) of the transparent film 61B, thereby resulting in another laminate. The resultant two laminates are bonded with each other through the near-infrared shielding layer 64, when the near-infrared shielding layer 64 has tackiness. When the near-infrared shielding layer 64 does not have tackiness, an adhesive layer is provided between the near-infrared shielding layer and the mesh-shaped conductive layer 67.

In case the 200 to 500nm absorbing compound is an ultraviolet absorber in the above-mentioned optical filter, it is general that the near-infrared shielding layer 64 contains tungsten oxide and/or composite tungsten oxide and the antireflection layer 66 contains the ultraviolet absorber. The adhesive layer 68 preferably contains neon shielding dye for removing orange color derived from neon emission. A display, especially PDP provided with the optical filter shows excellent displaying properties. Instead of the near-infrared shielding layer 64, the plastic film provided with a near-infrared shielding layer and ultraviolet shielding layer may be used as shown in Fig. 5.

In the above-mentioned optical filter, in case the 200 to 500nm absorbing compound is a compound having absorption maximum in a wavelength region of 300 to 500nm, especially 400 to 500, it is general that the near-infrared shielding layer 64 contains the tungsten oxide and/or composite tungsten oxide and the adhesive layer 68 contains the compound having absorption maximum in a wavelength region of 300 to 500nm, whereby orange color derived from neon emission is greatly removed and occurrence of bluish color is also repressed, and further harmful near-infrared ray harmful to the near-infrared shielding layer is effectively shielded. A display, especially PDP provided with the optical filter shows excellent displaying properties.

In general, the optical filter is bonded to a surface of a display through the adhesive layer 68, or the optical filter adhered to a glass plate through the adhesive layer 68 is placed at the front of PDP.

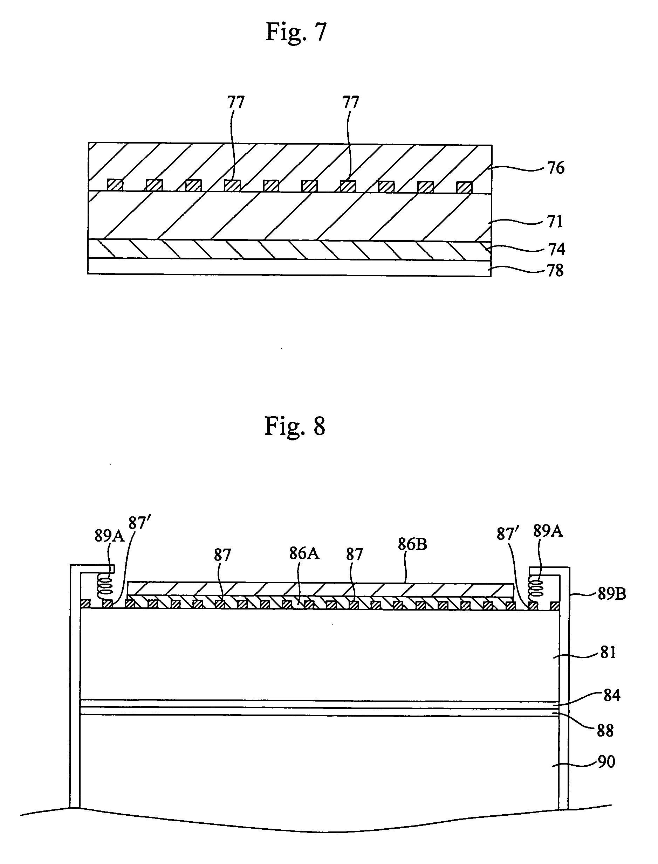

Fig. 7 is a schematic section view showing a preferred example of embodiments of the optical filter for display of the invention. A mesh-shaped conductive layer (electromagnetic shielding layer) 77 is formed on one side of a transparent film 71, an antireflection layer 76 is formed on the mesh-shaped conductive layer 77, and a near-infrared shielding layer 74 is formed on the other side (back side) of the transparent film 71 and further an adhesive layer 78 containing neon shielding dye is formed on the near-infrared shielding layer 74. Thus the optical filter uses only one substrate, and therefore is thin compared with one shown in Fig. 6.

In the above-mentioned optical filter, in case the 200 to 500nm absorbing compound is an ultraviolet absorber, generally the near-infrared shielding layer 74 contains the tungsten oxide and/or composite tungsten oxide and the antireflection layer 76 contains the ultraviolet absorber.

In the optical filter, in case the 200 to 500nm absorbing compound is a compound having absorption maximum in a wavelength region of 300 to 500nm, it is general that the near-infrared shielding layer contains the tungsten oxide and/or composite tungsten oxide and the adhesive layer contains the compound having absorption maximum in a wavelength region of 300 to 500nm.

Instead of the near-infrared shielding layer 74, the plastic film provided with a near-infrared shielding layer and ultraviolet adsorption layer may be used as shown in Fig. 5.

The optical filter may have any structure provided that it contains the tungsten oxide and/or composite tungsten oxide fine particles and the 200 to 500mn absorbing compound. In more detail, filters having structures other than those shown in Figs. 4 to 7, for example, structures appropriately changed in the position of the above-mentioned layers can be used.

Also, in the structures in shown in Figs. 4 to 7, the near-infrared shielding layer preferably contains the tungsten oxide and/or composite tungsten oxide fine particles and whether proof resin.

In particular, in case the optical display uses a compound having absorption maximum in a wavelength region of 300 to 500nm, it preferably has minimum transmittance of 30% or less in a wavelength region of 800 to 1,100nm (of near-infrared ray). Thereby harmful near-infrared ray can be effectively shielded. Further it is preferred to have minimum transmittance of 60% or less in a wavelength region of 560 to 610nm (of visual ray).

The b^{*} in the L^{*} a^{*} b^{*} display system (CIE L^{*} a^{*} b^{*} system) of the transmitted light of the optical display preferably is not less than -15. Thereby occurrence of bluish color is repressed whereby displaying properties can be enhanced.

The antireflection layer 66 of the invention generally is a hard coat layer, a laminated layer of a hard coat layer and a low refractive index layer having lower refractive index than that of the hard coat layer (in this case the hard coat layer being in contact with the conductive layer), or a laminated layer of a hard coat layer, a low refractive index layer and a high refractive index layer provided therebetween (in this case the hard coat layer being in contact with the conductive layer). Increase of a number of layers brings about more improvement of antireflection property. Otherwise, the antireflection layer 66 preferably is an anti-glare layer, or a combination of an anti-glare layer and a hard coat layer having lower refractive index than that of the anti-glare layer (in this case the anti-glare layer anti-glare layer being in contact with the conductive layer). The anti-glare layer generally has excellent antireflection property, and hence occasionally is not required to have an antireflection layer such as a low refractive index layer.

Though, in Figs. 6 and 7, a near-infrared shielding layer and an adhesive layer are used, a near-infrared shielding layer, a neon shielding layer and an adhesive layer may be used. Otherwise, an adhesive layer having near-infrared ray and neon absorbing functions, or a near-infrared ray having neon absorbing function and an adhesive layer (which are provided on a transparent film in this order), or a near-infrared ray absorption layer, a neon absorption layer and an adhesive layer (which are provided on a transparent film in this order) may be used.

The mesh-shaped conductive layer is, for example, a mesh-shaped metal layer or metal-containing layer, or a metal oxide layer (dielectric layer), or an alternately laminated layer of metal oxide layer and metal layer. The mesh-shaped metal layer or metal-containing layer is generally a layer formed by etching method or printing method, or a metal fiber layer, whereby a reduced resistance can be easily obtained. The openings of the mesh-shaped metal layer or metal-containing layer are generally filled with the hard coat layer or the antiglare layer as mentioned above, whereby enhanced transparent can be obtained. In case the openings are not filled with the hard coat layer, they are preferably filled with other layer, for example, a near-infrared shielding layer or a transparent resin layer therefor.

The near-infrared shielding layer has function that shields (cuts) undesired light from PDP. The layer generally contains tungsten oxide and/or composite tungsten oxide of the invention. The transparent adhesive layer, which contains neon shielding dye, is generally provided to be easily attached to a display. The release sheet may be provided on the transparent adhesive layer.

The optical filter for display having one transparent film is obtained, for example, by forming a mesh-shaped metal conductive layer on a whole surface of a transparent film, subsequently forming am antireflection layer on a whole surface of the mesh-shaped metal conductive layer, and then forming a near-infrared shielding layer on the other surface (back side) of the transparent film and forming a transparent adhesive layer on the near-infrared shielding layer. Otherwise, the optical filter for display using two transparent films is obtained, for example, by bonding a transparent film having a metal conductive layer thereon (generally further having an adhesive layer, etc. on its back side) with a transparent film having an antireflection layer on its one side and a near-infrared shielding layer having adhesion on its back side through the near-infrared shielding layer. Otherwise, the optical filter for display using two transparent films is obtained, for example, by laminating a transparent film having a metal conductive layer, an anti-glare layer and an antireflection layer such as a lower refractive index layer provided in this order thereon with another transparent film having a near-infrared shielding layer and a transparent adhesion layer in this order thereon, such that both the surfaces having no layer of the two transparent films face with each other, and bonding the two transparent films with each other

Materials used in the optical filter for display of the present invention are explained below.

The transparent film is generally a transparent film, particularly a transparent plastic film. The materials include anything having transparency (the transparency meaning transparency to visible light).
Examples of materials of the plastic films include polyester such as polyethylene terephthalate (PET) and polybutylene terephthalate, acrylic resin such as polymethyl methacrylate (PMMA), polycarbonate (PC), polystyrene, cellulose triacetate, polyvinyl alcohol, polyvinyl chloride, polyvinylidene chloride, polyethylene, ethylene-vinyl acetate copolymer, polyvinyl butyral, metal-crosslinked ethylene-methacrylic acid copolymer, polyurethane and cellophane.
Preferred are polyethylene terephthalate (PET), polycarbonate (PC), polymethyl methacrylate (PMMA), because have high resistance to processing load such as heat, solvent and bending, and especially high transparency.
Particularly PET is preferred because of excellent processing properties. Further though an organic dye contained in the function layer is exposed to ultraviolet [UV] light to be likely to be reduced in durability, polyester such as PET is preferably apt to absorb such UV light.

The transparent film has generally a thickness of 1µm to 10mm, preferably 1µm to 5mm, particularly 25 to 250µm depending upon the use (application) of the optical filter.

The metal conductive layer of the invention is configured such that surface resistance value of the resultant optical filter generally is not more than 10Ω/□, preferably in the range of 0.001 to5Ω/□, especially in the range of 0.005 to5Ω/□. The mesh-shaped (lattice-shaped) conductive layer is preferred.
Otherwise, the conductive layer may be a layer obtained by gas phase coating (deposition), the layer being a transparent conductive layer of metal oxide such as ITO.
Further, the conductive layer may be an alternately laminated layer of a dielectric layer of metal oxide such as ITO and a metal layer of Ag (e.g., ITO/Ag/ ITO/Ag/ ITO).

The mesh-shaped metal conductive layer includes a mesh-shaped metal layer made of metal fiber or metal-coated organic fiber, a layer obtained by etching a metal (e.g., Cu) layer provided on a transparent film so as to form mesh having openings, and a layer obtained by printing an electrically conductive ink on a transparent film so as to form mesh.

The mesh of the mesh-shaped metal conductive layer preferably has line width of 1µm to 1mm and opening ratio of 50% or more, which generally comprises metal fiber or metal-coated organic fiber. Further preferred is a mesh having line width of 10 to 500µm and opening ratio of 50 to 95%. In the mesh-shaped metal conductive layer, line width more than 1mm brings about enhanced electromagnetic-wave shielding property, while opening ratio is reduced. Line width less than 1µm brings about reduction of the strength of the resultant mesh to render its handling difficult. Moreover, opening ratio more than 95% renders keeping of the shape of the mesh difficult, while opening ratio less than 40% brings about reductions of optical transparency and of light amount from a display.

The opening ratio (aperture ratio) of the mesh-shaped metal conductive layer means the proportion of the area of the opening portion of the layer to the projected area of the layer.

Examples of metals for the metal fiber and /or metal-coated organic fiber of the mesh-shaped metal conductive layer include copper, stainless, aluminum, nickel, titanium, tungsten, tin, lead, iron, silver, carbon or alloys thereof, preferably copper, stainless or nickel.

Examples of organic materials used in the metal-coated organic fiber include polyester, nylon, polyvinylidene chloride, aramid, Vinylon, and cellulose.

In a patternwise etched conductive foil such as metallic foil, as metals for the metallic foil, copper, stainless, aluminum, nickel, iron, brass or alloys thereof, preferably copper, stainless or aluminum is used.

In case of decreasing the thickness of the foil to excess, handling of the foil and workability of pattern etching are reduced. In case of increasing the thickness to excess, a thickness of the resultant filter is increased and time period required for etching procedure is lengthened. Therefore the thickness of the conductive layer preferably is in the range of 1 to 200 µm.

The etched pattern may have any shapes. For example, the metallic foil is in the form of stripe, which is obtained by forming square openings (pores) on the foil, or in the form of punching metal, which is obtained by forming circle, hexagon, triangle or ellipse openings. The openings (pores) may be regularly arranged or irregularly arranged to form a random pattern. The opening ratio (the proportion of the area of the opening portion to the projected area) of the metal foil is preferably in the range of 20 to 95%. The opening ratio is further preferably not less than 50%, especially 50 to 95%. The width of the line is preferably in the range of 10 to 500µm.

Besides above, material soluble in a solvent is dot-wise applied to a film to form dots, a conductive material layer insoluble in the solvent is formed on the film, and the film is brought in contact with the solvent to remove the dots and the conductive material layer provided on the dots whereby a mesh-shaped metal conductive layer can be obtained. The mesh-shaped metal conductive layer may be used in the invention.

A plated layer (metallic deposit) may be further provided on the metal conductive layer. Particularly, it is preferred to form the plated layer on the layer obtained by the formation of dots using material soluble in a solvent. The plated layer can be formed by conventional electrolytic plating and nonelectrolytic plating. Examples of metals used in the plating generally include copper, copper alloy, nickel, aluminum, silver, gold, zinc or tin. Preferred is copper, copper alloy, silver or nickel, particularly copper or copper alloy is preferred in view of economic efficiency and conductive property.

Further antiglare property may be provided to the conductive layer. In a step of the antiglare treatment, a blackened treatment may be carried out on a surface of the (mesh-shaped) conductive layer. For example, oxidation treatment of metal layer, black plating of chromium alloy, or application of black or dark color ink can be carried out.

The antireflection layer of the invention generally contains an ultraviolet absorber. The ultraviolet absorber used in the intermediate layer of the laminate and the ultraviolet shielding layer provided on the plastic film can be also used in the antireflection layer. Hence, in case a hard coat layer contains an ultraviolet absorber, the hard coat layer can be formed in the same manner as the above-mentioned preparation of the hard coat layer except adding an ultraviolet absorber to the materials for forming hard coat layer.

The antireflection layer generally is a laminated layer of a hard coat layer having lower refractive index than that of the transparent film as a substrate and a low refractive index layer having lower refractive index than that of the hard coat layer; or is a laminated layer of a hard coat layer, a low refractive index and a high refractive index layer provided therebetween. The antireflection layer may be only a hard coat layer, which has antireflection effect. However, in case the transparent film has low refractive index, the antireflection layer may be a laminated layer of a hard coat layer having higher refractive index than that of the transparent film and a low refractive index layer; or a laminated layer of a hard coat layer, a low refractive index and a high refractive index layer provided thereon.

The hard coat layer is a layer mainly consisting of synthetic resin such as acrylic resin, epoxy resin, urethane resin, silicon resin, etc. The hard coat layer generally has a thickness of 1 to 50µm, preferably 1 to 10µm. The synthetic resin is generally thermosetting resin or ultraviolet curable resin, preferred ultraviolet curable resin. The ultraviolet curable resin can be cured for a short time, and hence has excellent productivity.

Examples of the thermosetting resin include phenol resin, resorcinol resin, urea resin, melamine resin, epoxy resin, acrylic resin, urethane resin, furan resin and silicon resin.

The hard coat layer preferably is a cured layer of an ultraviolet curable resin composition, which comprises ultraviolet curable resin, photopolymerization initiator, etc. The layer generally has a thickness of 1 to 50µm, preferably 1 to 10µm.

Examples of the ultraviolet curable resins (monomers, oligomers) include (meth)acrylate monomers such as 2-hydroxyethyl (meth)acrylate, 2-hydroxyropyl (meth)acrylate, 4-hydroxybutyl (meth)acrylate, 2-ethylhexylpolyethoxy (meth)acrylate, benzyl (meth)acrylate, isobornyl (meth)acrylate, phenyloxyethyl (meth)acrylate, tricyclodecane mono(meth)acrylate, dicyclopentenyloxyethyl (meth)acrylate, tetrahydrofurfuryl (meth)acrylate, acryloylmorpholine, N-vinylcaprolactam, 2-hydroxy-3-phenyloxypropyl (meth)acrylate, o-phenylphenyloxyethyl (meth)acrylate, neopentylglycol di(meth)acrylate, neopentyl glycol dipropoxy di(meth)acrylate, neopentyl glycol hydroxypivalate di(meth)acrylate, tricyclodecanedimethylol di(meth)acrylate, 1,6-hexanediol di(meth)acrylate, nonanediol di(meth)acrylate, trimethylolpropane tri(meth)acrylate, pentaerythritol tri(meth)acrylate, pentaerythritol tetra(meth)acrylate, tris[(meth)acryloxyethyl]isocyanurate and ditrimethylolpropane tetra(meth)acrylate; and
the following (meth)acrylate oligomer such as:
polyurethane (meth)acrylate such as compounds obtained by reaction among the following polyol compound and the following organic polyisocyanate compound and the following hydroxyl-containing (meth)acrylate:
   the polyol compound (e.g., polyol such as ethylene glycol, propylene glycol, neopentyl glycol, 1,6-hexanediol, 3-methyl-1,5-pentanediol, 1,9-nonanediol, 2-ethyl-2-butyl-1,3-propanediol, trimethylolpropane, diethylene glycol, dipropylene glycol, polypropylene glycol, 1,4-dimethylolcyclohexane, bisphenol-A polyethoxydiol and polytetramethylene glycol; polyesterpolyol obtained by reaction of the above-mentioned polyol with polybasic acid or anhydride thereof such as succinic acid, maleic acid, itaconic acid, adipic acid, hydrogenated dimer acid, phthalic acid, isophthalic acid and terephthalic acid; polycaprolactone polyol obtained by reaction of the above-mentioned polyol with ε-caprolactone; a compound obtained by reaction of the above-mentioned polyol and a reaction product of the above-mentioned polybasic acid or anhydride thereof and ε-caprolactone; polycarbonate polyol; or polymer polyol), and
   the organic polyisocyanate compound (e.g., tolylene diisocyanate, isophorone diisocyanate, xylylene diisocyanate, diphenylmethane-4,4'-diisocyanate, dicyclopentanyl diisocyanate, hexamethylene diisocyanate, 2,4,4'-trimethylhexamethylene diisocyanate, 2,2',4-trimethylhexamethylene diisocyanate), and
   the hydroxyl-containing (meth)acrylate (e.g., 2-hydroxyethyl (meth)acrylate, 2-hydroxyropyl (meth)acrylate, 4-hydroxybutyl (meth)acrylate, 2-hydroxy-3-phenyloxypropyl (meth)acrylate, cyclohexane-1,4-dimethylolmono(meth)acrylate, pentaerythritol tri(meth)acrylate or glycerol di(meth)acrylate);
   bisphenol-type epoxy(meth)acrylate obtained by reaction of bisphenol-A epoxy resin or bisphenol-F epoxy resin and (meth)acrylic acid.
These compounds can be employed singly or in combination of two or more kinds. The ultraviolet curable resin can be used together with thermo polymerization initiator, i.e., these can be employed as a thermosetting resin.

To obtain the hard coat layer, hard polyfunctional monomers such as pentaerythritol tri(meth)acrylate, pentaerythritol tetra(meth)acrylate, and dipentaerythritol hexa(meth)acrylate, are preferably used in a main component.

Photopolymerization initiators can be optionally selected depending upon the properties of the ultraviolet curable resin used. Examples of the photopolymerization initiators include acetophenone type initiators such as 2-hidroxy-2-methyl-1-phenylpropane-1-on, 1-hydroxycyclohexylphenylketone and 2-methyl-1-[4-(methylthio)phenyl]-2-morphorino-propane-1-on; benzoin type initiators such as benzylmethylketal; benzophenone type initiators such as benzophenone, 4-phenylbenzophenone and hydroxybenzophenone; thioxanthone type initiators such as isopropylthioxanthone and 2,4-diethythioxanthone. Further, as special type, there can be mentioned methylphenylglyoxylate. Especially preferred are 2-hidroxy-2-methyl-1-phenylpropane-1-on, 1-hydroxycyclohexylphenylketone, 2-methyl-1-[4-(methylthio)phenyl]-2-morphorinopropane-1-on and benzophenone. These photopolymerization initiators can be employed together with one or more kinds of a conventional photopolymerization promoter such as a benzoic acid type compound (e.g., 4-dimethylaminobenzoic acid) or a tertiary amine compound by mixing with the promoter in optional ratio. Only the initiator can be employed singly or in combination of two or more kinds. Especially, 1-hydroxycyclohexylphenylketone (Irgercure 184, available from Chiba-Specialty Chemicals) is preferred.

The initiator is preferably contained in the resin composition in the range of 0.1 to 10% by weight, particularly 0.1 to 5% by weight based on the resin composition.

Though the hard coat layer generally contains an ultraviolet absorber, the hard coat layer further may contain an aging resistant agent, a processing auxiliary agent for paint and a coloring agent in a small amount.

The ultraviolet absorber is preferably used in an amount of 0.1 to 20 parts by weight, more preferably 0.5 to 10, especially parts by weight 1 to 5 parts by weight based on 100 parts by weight of the resin composition.

The hard coat layer preferably has lower reflective index than that of the transparent film, and the use of the ultraviolet curable resin generally brings about easily the lower reflective index. Hence, as the transparent film, materials having high reflective index such as PET is preferably used. Therefore the hard coat layer preferably has reflective index of not more than 1.60. The thickness is mentioned above.

The high reflective index layer is preferably a layer (cured layer) in which conductive metal oxide particles (inorganic compound) such as ITO, ATO, Sb₂O₃, SbO₂ In₂O₃, SnO₂, ZnO, Al-doped ZnO, TiO₂ are dispersed in polymer (preferably ultraviolet curable resin). The conductive metal oxide particle generally has mean particle size of 10 to 10,000nm, preferable 10 to 50nm. Especially ITO (especially mean particle size of 10 to 50nm) is preferred. The thickness generally is in the range of 10 to 500nm, preferably 20 to 200nm.

In case the high reflective index layer is a conductive layer, the minimum reflectivity of the surface of the antireflection layer can be reduced to not more than 1.5% by increasing the reflective index of the high reflective index layer to not less than 1.64. Further the minimum reflectivity of the surface of the antireflection layer can be reduced to not more than 1.0% by preferably increasing the reflective index of the high reflective index layer as not less than 1.69, especially 1.69 to 1.82.

The low reflective index layer preferably a layer (cured layer) in which particles of silica or fluorine resin (preferably hollow silica) are dispersed in polymer (preferably ultraviolet curable resin). The low reflective index layer contains preferably 10 to 40 % by weight, especially 10 to 30% by weight of the particles. The low reflective index layer preferably has refractive index of no t more than 1.45. The refractive index of more than 1.45 brings about reduction of antireflection property of the antireflection layer. The thickness generally is in the range of 10 to 500nm, preferably 20 to 200nm.

The hollow silica preferably has mean particle size of 10 to 100nm, especially 10 to 50nm, and specific gravity 0.5 to 1.0, especially 0.8 to 0.9.

The hard coat layer preferably has visible light transmission of not less than 70%. Also, the low and high reflective index layers preferably have visible light transmission of not less than 85%.

In case the antireflection layer is composed of the hard coat layer and the above-mentioned two layers, for example, the hard coat layer has a thickness of 2 to 20µm, the high reflective index layer has a thickness of 75 to 90nm, and the low reflective index layer has a thickness of 85 to 1 10nm.

The provision of each of the antireflection layer can be carried out, for example, by mixing polymer (preferably ultraviolet curable resin) with if desired the ultraviolet absorber and the above-mentioned particles, and applying the resultant coating liquid onto the transparent film, and then drying and exposing to ultraviolet rays. The layers may be applied and exposing to UV rays, respectively, or all the layers may be applied and then exposing to UV rays at one time.

The application can be carried out, for example, by applying a coating liquid (solution) of ultraviolet curable resin including acrylic monomers in a solvent such as toluene by means of gravure coater, and drying, and then exposing to UV rays to be cured. This wet-coating method enables high-speed, uniform and cheap film formation. After the coating, for example, the coated layer is exposed to UV rays to be cured whereby the effects of improved adhesion and enhanced hardness of the layer can be obtained. The conductive layer can be formed in the same manner.

In the UV- rays curing, it is possible to adopt, as light source used, various sources generating light in the wavelength range of from ultraviolet to visible rays. Examples of the sources include super-high-pressure, high-pressure and low-pressure mercury lamps, a chemical lamp, a xenon lamp, a halogen lamp, a mercury halogen lamp, a carbon arc lamp, and an incandescent electric lamp, and laser beam. The exposing time is generally in the range of a few seconds to a few minutes, depending upon kinds of the lamp and strength of light. To promote the curing, the laminate may be heated beforehand for 40 to 120°C, and then the heated laminate may be exposed to ultraviolet rays.

As mentioned above, the antiglare layer is also preferably formed instead of the hard coat layer, which is apt to bring about enhanced antireflection effect. The antiglare layer is preferably obtained, for example, by applying a coating liquid (solution) of transparent filler such as polymer particles (e.g., acrylic beads) preferably having mean particle size of 1 to 10µm dispersed in binder and drying, or by applying a coating liquid (solution) of ultraviolet curable resin including the transparent filler such as polymer particles (e.g., acrylic beads) in materials for forming hard coat layer, and cured to have hard coat function. The antiglare layer preferably has thickness of 0.01 to 20µm.

A protective layer may be provided on the antireflection layer. The protective layer preferably is formed in the same manner as in the hard coat layer.

The optical filter of the invention contains tungsten oxide and/or composite tungsten oxide which is capable of efficiently shielding near-infrared ray as mentioned previously.

The optical filter of the invention contains tungsten oxide and/or composite tungsten oxide capable of efficiently shielding near-infrared ray and a compound having absorption maximum in a wavelength region of 200 to 500nm (e.g., ultraviolet absorber or a compound having absorption maximum in a wavelength region of 300 to 500nm for repressing or removing bluish color), as mentioned previously.

A layer containing tungsten oxide and/or composite tungsten oxide generally is the near-infrared shielding layer. However, the hard coat layer or the adhesive layer may contain the tungsten oxide and/or composite tungsten oxide

The compound having absorption maximum in a wavelength region of 300 to 500nm is generally contained in the adhesive layer, whereas he tungsten oxide and/or composite tungsten oxide is generally contained in the near-infrared shielding layer, the hard coat layer or the adhesive layer.
The near-infrared shielding layer can be formed in the same manner as the heat-ray shielding layer.

The near-infrared shielding layer is generally prepared, for example, by applying a coating liquid including the (composite) tungsten oxide and resin (thermoplastic resin, ultraviolet- or electron-beam- curable resin or thermosetting resin), if desired drying and if desired curing. Otherwise, the near-infrared shielding layer can be also prepared by applying the coating liquid including the (composite) tungsten oxide and resin, and only drying. As the resin, it is also preferred to use the weather proof resin. When the near-infrared shielding layer is used as a film, it is generally a near-infrared cut film, such as (composite) tungsten oxide-containing film.

Besides the (composite) tungsten oxide, if necessary other dyes can be used. The dyes generally have absorption maximum in wavelength of 800 to 1200nm, and the examples include phthalocyanine dyes, metal complexes dyes, nickel dithioren complexes dyes, cyanine dyes, squalirium dyes, polymethine dyes, azomethine dyes, azo dyes, polyazo dyes, diimmonium dyes, aminium dyes, anthraquinone dyes. Preferred are cyanine dyes, phthalocyanine dyes, diimmonium dyes. These dyes can be employed singly or in combination. The near-infrared shielding layer may be an adhesive layer. In this case, it is necessary to use a thermoplastic resin having tackiness (e.g., acrylic resin) instead of the resin or with the resin.

The near-infrared shielding layer preferably contains the (composite) tungsten oxide in an amount of 0.1 to 20 parts by weight, more preferably 1 to 20 parts by weight, especially 1 to 10 parts by weight. The thickness generally is in the range of 1 to 50µm, preferably 5 to 50µm, especially 10 to 50µm.

In the invention, a neon-emission absorption function may be given to the near-infrared shielding layer such that the near-infrared shielding layer has function for adjusting color hue. For this purpose, although a neon-emission absorption layer may be provided, the near-infrared shielding layer may contain a neon-emission selective absorption dye. An adhesive layer having neon-emission absorption function is preferably provided.

Examples of the neon-emission selective absorption dyes include porphyrin dyes, azaporphyrin dyes, cyanine dyes, squalirium dyes, anthraquinone dyes, phthalocyanine dyes, polymethine dyes, polyazo dyes, azulenium dyes, diphenylmethane dyes, triphenylmethane dyes. The neon-emission selective absorption dyes are required to have neon-emission selective absorption function at wavelength of approx. 585nm and small absorption in a wavelength range of visible light except the wavelength. Hence, the dyes preferably have absorption maximum wavelength of 575 to 595nm, and half bandwidth of absorption spectrum of 40nm or less.

Further, coloring materials, ultraviolet absorbers, and antioxidants may be added so long as those materials do not adversely affect the optical properties of the filter.

The optical filter (near-infrared shielding layer) preferably contains as the 200 to 500 absorbing compound for repressing or removing bluish color a compound having absorption maximum in a wavelength region of 300 to 500mn. It is further preferred to introduce the compound into an adhesive layer having neon-emission absorption function.

The compound having absorption maximum in a wavelength region of 300 to 500nm (especially 5400 to 500nm) generally is yellow colorant (dyes, pigments), and the Examples include dyes such as Metanil Yellow, Mordant Yellow GT, Palatine Fast Yellow GRN, Benzo Fast Copper RLN, Sirius Yellow GG, Cellitone Fast Yellow G, Rapidogen Yellow G, Rapidogen Yellow GS, Indanthrene Yellow G, Indanthrene Yellow 3GF, Indanthrene Yellow 3R, Indanthrene Yellow 4GK, Indanthrene Yellow 7GK, Algol Yellow GCN, Indanthrene Yellow GF, Indanthrene Yellow 6GD, Anthrasol Yellow V, Immedial Yellow G, Immedial Yellow D, Immedial Yellow GG, Immedial Yellow R extra, Immedial Yellow RR, Quinoline Yellow extra, Naphthol Yellow S and Helindone Yellow CG, Aizenspiron Yellow 3RH; pigments such as chrome yellow, zinc chromate (zinc yellow), strontium chromate (strontium yellow, stronshine yellow), Chinese yellow (yellow ocher), nickel yellow, bismuth vanadium yellow (vanadium yellow, bismuth yellow); quinophthalone, isoindoline, isoindolinone. Preferred are the compounds having strong absorption in the wavelength of approx. 450, especially 430 to 470nm.

The layer containing the above-mentioned compounds (dyes or pigments), preferably the adhesive layer containing the neon-emission selective absorption dyes, preferably contains the above-mentioned compounds in an amount of 0.1 to 20 parts by weight, more preferably 1 to 20 parts by weight, especially 1 to 10 parts by weight based on 100 parts by weight of the binder resin (resin for adhesive). The thickness of the layer generally is in the range of 1 to 50µm, preferably 5 to 50µm, especially 10 to 50µm.

The above-mentioned or conventional adhesive layer is used to bond the optical filter of the invention to a display, and therefore any resin having adhesion function can be used as materials for forming the adhesive layer. Examples of the materials include acrylic adhesives made of butyl acrylate and the like, rubber adhesives, TPE (thermoplastic elastomer) adhesives comprising as main component TPE such as SEBS (styrene/ethylene/butylene/styrene) and SBS (styrene/ butadiene/styrene).

The thickness of the adhesive layer generally is in the range of 5 to 500µm, preferably in the range of 10 to 100µm. The optical filter can be generally attached to a glass plate of a display through the adhesive layer.

The optical filter of the invention has the transmittance in the wavelength of 850 to 1,000mn of preferably 20% or less, especially 15% or less as the near-infrared absorption properties, and the transmittance at the wavelength of 585m of preferably 50% or less as the selective absorption properties.

In the optical filter of the invention, a minimum value of transmittance of near-infrared ray in the wavelength region of 800 to 1,100nm is preferably not more than 30%, especially not more than 20%. Thereby, the transmittance in the wavelength region causing malfunction of a remote controller of peripheral equipment can be reduced. Particularly, by configuring a minimum value of transmittance of visible ray in the wavelength region of 560 to 6100nm to preferably not more than 60%, more preferably not more than 40%, light at the wavelength of orange color can be absorbed, resulting in enhancement of true red coloration and hence improvement of color reproducibility. It is considered that the reduced transmittance region of the optical filter includes the orange color having a peek in 575 to 595nm causing reduction of color reproducibility.

The b^{*} in the L^{*} a^{*} b^{*} display system (CIE L^{*} a^{*} b^{*} system) of the optical filter preferably is not less than -15.

In case of using two transparent films in the invention, examples of materials (adhesives) used in the adhesion of the films include ethylene/vinyl acetate copolymer, ethylene/methyl acrylate copolymer, acrylic resin (e.g., ethylene/(meth)acrylic acid copolymer, ethylene/ethyl (meth)acrylate copolymer, ethylene/methyl (meth)acrylate copolymer, metal-ion crosslinked ethylene/(meth)acrylic acid copolymer), and ethylene copolymers such as partially saponified ethylene/vinyl acetate copolymer, carboxylated ethylene/vinyl acetate copolymer, ethylene/(meth)acrylic acid/maleic anhydride copolymer, ethylene/vinyl acetate/(meth)acrylate copolymer. The (meth)acrylic acid means acrylic acid and methacrylic acid and the (meth)acrylate means acrylate and methacrylate. Besides these polymers, there can be mentioned polyvinyl butyral (PVB) resin, epoxy resin, phenol resin, silicon resin, polyester resin, urethane resin, rubber adhesives, thermoplastic elastomer (TPE) such as SEBS (styrene/ethylene/butylene/styrene) and SBS (styrene/ butadiene/styrene). The acrylic adhesives and epoxy resins are preferred because they show excellent adhesion.

The thickness of the above-mentioned adhesive layer generally is in the range of 10 to 50µm, preferably in the range of 20 to 30µm. The optical filter can be generally attached to a glass plate of a display through the adhesive layer by pressing under heating.

In case EVA (ethylene/vinyl acetate/ ethylene copolymer) is used as materials of the adhesive layer, materials described in the laminate mentioned previously can be used.

Materials for the release sheet provided on the adhesive layer is generally transparent polymers having glass transition temperature of not less than 50°C. Examples of the materials include polyester resin (e.g., polyethylene terephthalate, polycyclohexylene terephthalate, polyethylene naphthalate), polyamide (e.g., nylon 46, modified nylon 6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate can be preferably employed. The thickness is generally in the range of 10 to 200µm, especially in the range of 30 to 100µm.

A schematic section view showing an example of the condition that the optical filter is attached onto an image displaying surface of a plasma display panel as one kind of display is shown in Fig. 8. The optical filter is attached onto the image display surface of the plasma display panel 90 through the adhesive layer 88. In more detail, the optical filter is provided on the image display surface of the plasma display panel 90, the optical filter having a structure that a mesh-shaped metal conductive layer 87, a hard coat layer 86A and an antireflection layer 86B such as a low refractive index layer are provided on one surface of a transparent film 81 in this order, and a near-infrared shielding layer 84 and an adhesive layer 85 are provided on the other surface of the transparent film 81 in this order. Further, a mesh-shaped metal conductive layer 87' is exposed in an edge area (edge area of side) of the filter. The exposed mesh-shaped metal conductive layer 87' is in contact with a metallic cover 89B provided on a periphery of the plasma display panel 90 through a shield finger (leaf-spring shaped metal part) 89A. A conductive gasket may be used instead of the shield finger. Hence, conduction between the optical filter and the metallic cover 89B can be attained to bring about grounded condition. The metallic cover 89B may be metal rack or frame. As apparent from Fig. 8, the mesh-shaped metal conductive layer 87 is directed to viewing audience.

In the PDP of the invention, a plastic film is generally used as the transparent film, and therefore the optical filter is directly attached onto a surface of a glass plate of the PDP whereby PDP itself can be reduced in weight, thickness and cost, especially in case of using only one transparent film. Further, compared with PDP having a front plate of a transparent molded body in front of the PDP, PDP provided with the optical filter of the invention enables the removal of an air layer between PDP and a filter for PDP and hence resolves the increase of visible-ray reflectivity caused by the interface reflection and the occurrence of the double reflection. Thereby PDP of the invention can be improved in visibility.

Though the near-infrared shielding material is useful in the laminate and optical filter according the invention, it can be utilized in any uses (applications) requiring the above-mentioned effects. The near-infrared shielding material includes any structures (e.g., one having one layer containing the oxide and compound, one having two layers containing the oxide and the compound respectively), provided that the structures comprise tungsten oxide and/or composite tungsten oxide and a compound having absorption maximum in a wavelength region of 200 to 500nm.

### EXAMPLE

### [Example 1]

### (Preparation of intermediate layer)

Raw materials having the following formulation were processed by calendaring process to prepare an EVA sheet (thickness: 0.7mm) as an intermediate layer (transparent adhesive layer). The raw materials were kneaded at 80°C for 15 minutes, and the calendar rolls had a temperature of 80°C and the processing rate was 5m/min.

| (Formulation (parts: parts by weight)) | |
|---|---|
| EVA resin (content of vinyl acetate: 25 wt. %, Ultracene 635 available from Tosoh Corporation): | 100 parts |

| Crosslinker | |
|---|---|
| (t-butylperoxy-2-ethylhexyl monocarbonate, Perbutyl E available from NOF Corporation): | 3.0 parts |

| Silane coupling agent | |
|---|---|
| (KBM503 available from Shin-Etsu Chemical Co., Ltd.): | 1.0 part |

| UV absorber | |
|---|---|
| (2,2'-dihydroxy-4,4'-dimethoxybenzophenone, Uvinul 3049 available from BASF Japan, maximum absorption wavelength: 280nm, 340nm): | 1.0 part |

### (Preparation of PET film having heat-ray shielding layer)

A coating liquid for heat-ray shielding layer having the following formulation was applied onto a PET film (thickness: 100µm, A4300 available from Toyobo Co., Ltd.) with a bar coater, dried at 80°C for 30 seconds, and exposed to UV light (in 500mJ/cm² by using high-pressure mercury lamp). Thereby a heat-ray shielding layer having thickness of 1µm was formed.

| (Formulation (parts: parts by weight)) | |
|---|---|
| Cesium tungsten oxide (Cs_{0.33}WO₃, Solid content: 20% by weight, MIBK: 80% by weight) | 100 parts |

| Dipentaerythritol hexaacrylate | |
|---|---|
| (DPHA available from Nippon Kayaku Co., Ltd.) Irgacure 184 | 15 parts |
| (Available from Ciba specialty chemicals) | 2 parts |

### (Preparation of laminate)

A PET film having heat-ray shielding layer obtained above was inserted between the two glass plates (2.5 mm) with inserting the EVA sheet each of two gaps between the glass plates and the PET film, and the glass plates having the PET film and the two EVA sheets was inserted in a rubber bag and deaired in vacuum and preliminary bonded at 110°C. Subsequently, the preliminary bonded glasses was introduced into an oven and pressurized at 130°C for 30 minutes to prepare a laminated glass (glass plate/EVA sheet/PET film/EVA sheet/glass plate) of the invention. The PET is the PET film having heat-ray shielding layer.

### [Example 2]

### (Preparation of intermediate layer)

Raw materials having the following formulation were processed by calendaring process to prepare an EVA sheet (thickness: 0.7mm) as an intermediate layer (transparent adhesive layer). The raw materials were kneaded at 80°C for 15 minutes, and the calendar rolls had a temperature of 80°C and the processing rate was 5m/min.

| (Formulation (parts: parts by weight)) | |
|---|---|
| EVA resin (content of vinyl acetate: 25 wt. %, Ultracene 635 available from Tosoh Corporation): | 100 parts |

| Crosslinker | |
|---|---|
| (t-butylperoxy-2-ethylhexyl monocarbonate, Perbutyl E available from NOF Corporation): | 3.0 parts |

| Silane coupling agent | |
|---|---|
| (KBM503 available from Shin-Etsu Chemical Co., Ltd.): | 1.0 part |

| UV absorber | |
|---|---|
| (2,2'-dihydroxy-4,4'-dimethoxybenzophenone, Uvinul 3049 available from BASF Japan Maximum absorption wavelength: 280nm, 340nm): | 0.05 part |

### (Preparation of PET film having heat-ray shielding layer and ultraviolet absorption layer)

A coating liquid for heat-ray shielding layer having the following formulation was applied onto a PET film (thickness: 100µm, A4300 available from Toyobo Co., Ltd.) with a bar coater, dried at 80°C for 30 seconds, and exposed to UV light (in 500mJ/cm² by using high-pressure mercury lamp). Thereby a heat-ray shielding layer having thickness of 1µm was formed.

| (Formulation (parts: parts by weight)) | |
|---|---|
| Cesium tungsten oxide (Cs_{0.33}WO₃, | |
| Solid content: 20% by weight, MIBK: 80% by weight) Dipentaerythritol hexaacrylate | 100 parts |
| (DPHA available from Nippon Kayaku Co., Ltd.) | 25 parts |

| Irgacure 184 | |
|---|---|
| (Available from Ciba specialty chemicals) | 2 parts |

A coating liquid for ultraviolet absorption layer having the following formulation was applied onto a surface having no heat-ray shielding layer of the PET film with a bar coater, dried at 80°C for 30 seconds, and exposed to UV light (in 2,000nJ/cm² by using high-pressure mercury lamp). Thereby an ultraviolet absorption layer having thickness of 2µm was formed.

| (Formulation (parts: parts by weight)) | |
|---|---|
| Zinc oxide (mean particle size: 40nm, Solid content: 25% by weight, MIBK: 75% by weight) | 100 parts |

| Dipentaerythritol hexaacrylate | |
|---|---|
| (DPHA available from Nippon Kayaku Co., Ltd.) | 25 parts |

| Irgacure 184 | |
|---|---|
| (Available from Ciba specialty chemicals) | 2 parts |

### (Preparation of laminate)

A PET film having heat-ray shielding layer obtained above was inserted between the two glass plates (2.5 mm) with inserting the intermediate layer (EVA film) each of two gaps between the glass plates and the PET film, and the glass plates having the laminate and the two PET films was inserted in a rubber bag and deaired in vacuum and preliminary bonded at 110°C. Subsequently, the preliminary bonded glasses was introduced into an oven and pressurized at 130°C for 30 minutes to prepare a laminated glass (glass plate/EVA sheet/PET film/EVA sheet/glass plate) of the invention. The PET is the PET film having heat-ray shielding layer and ultraviolet absorption layer.

### [Example 3]

### (Preparation of intermediate layer)

Raw materials having the following formulation were processed by calendaring process to prepare an EVA sheet (thickness: 0.7mm) as an intermediate layer (transparent adhesive layer). The raw materials were kneaded at 80°C for 15 minutes, and the calendar rolls had a temperature of 80°C and the processing rate was 5m/min.

| (Formulation (parts: parts by weight)) | |
|---|---|
| EVA resin (content of vinyl acetate: 25 wt. %, Ultracene 635 available from Tosoh Corporation): | 100 parts |

| Crosslinker | |
|---|---|
| (t-butylperoxy-2-ethylhexyl monocarbonate, Perbutyl E available from NOF Corporation): | 3.0 parts |

| Silane coupling agent | |
|---|---|
| (KBM503 available from Shin-Etsu Chemical Co., Ltd.): | 1.0 part |

| UV absorber | |
|---|---|
| (2,2'-dihydroxy-4,4'-dimethoxybenzophenone, | |
| Uvinul 3049 available from BASF Japan): | 0.05 part |

### (Preparation of PET film having heat-ray shielding layer and ultraviolet absorption layer)

A coating liquid for heat-ray shielding layer having the following formulation was applied onto a PET film (thickness: 100µm, A4300 available from Toyobo Co., Ltd.) with a bar coater, dried at 80°C for 30 seconds, and exposed to UV light (in 50OmJ/cm² by using high-pressure mercury lamp). Thereby a heat-ray shielding layer having thickness of 1µm was formed.

| (Formulation (parts: parts by weight)) | |
|---|---|
| Cesium tungsten oxide (Cs_{0.33}WO₃, Solid content: 20% by weight, MIBK: 80% by weight) | 100 parts |

| Dipentaerythritol hexaacrylate | |
|---|---|
| (DPHA available from Nippon Kayaku Co., Ltd.) | 15 parts |

| Irgacure 184 | |
|---|---|
| (Available from Ciba specialty chemicals) | 2 parts |

A coating liquid for ultraviolet absorption layer having the following formulation was applied onto a surface having no heat-ray shielding layer of the PET film with a bar coater, and dried at 80°C for 30 seconds. Thereby an ultraviolet absorption layer having thickness of 10µm was formed.

| (Formulation (parts: parts by weight)) | |
|---|---|
| Ultraviolet absorber (Uvinul 3049 | |
| available from BASF Japan) | 1.0 parts |
| Polymethyl methacrylate | 25 parts |
| MIBK | 50 parts |

### (Preparation of laminate)

A PET film having heat-ray shielding layer and ultraviolet absorption layer obtained above was inserted between the two glass plates (2.5 mm) with inserting the intermediate layer (EVA film) each of two gaps between the glass plates and the PET film, and the glass plates having the laminate and the two PET films was inserted in a rubber bag and deaired in vacuum and preliminary bonded at 110°C. Subsequently, the preliminary bonded glasses was introduced into an oven and pressurized at 130°C for 30 minutes to prepare a laminated glass (glass plate/EVA sheet/PET film/EVA sheet/glass plate) of the invention. The PET is the PET film having heat-ray shielding layer and ultraviolet absorption layer.

### [Comparison Example 1]

The procedures of Example 1 were repeated except for using no ultraviolet absorber (Uvinul 3049) in the preparation of the EVA sheet to prepare a laminated glass.

### [Transmittance of ultraviolet absorption layer (intermediate layer or ultraviolet absorption layer) and laminate]

Transmittances of the intermediate layers of Example 1 and Comparison Example 1 and the ultraviolet absorption layers of Examples 2 and 3 (the layer being peeled from PET film) are measured at wavelengths of 350nm, 360nm, 370nm, 380nm, 390nm, 400nm, 410nm and 450nm by using a spectral photometer (UV3100 available from Shimadzu Corporation).

### [Evaluation of laminate]

### (1) Initial luminous transmittance (Y in XYZ display system in visual field of 2 degrees)

By using transmission spectra of the films measured by a spectral photometer (UV3100PC available from Shimadzu Corporation), Y in tristimulus value of XYZ display system is calculated to set it to luminous transmittance Y. The calculation is carried out according to JIS Z8722-2000.

### (2) Luminous transmittance after weather resistant test

Super UV test, which is carried out by using Super UV tester SUV-F 11 (available from Iwasaki Electric Co., Ltd.), is carried out for 250 hours, and thereafter the above-mentioned luminous transmittance (1) is measured.

The measured results are shown below.

[Table 1]

**Table 1**

| Example | Example 1 Intermediate layer/laminate | Example 2 UV absorption layer/laminate | Example 3 UV absorption layer/laminate | Com. Ex. 1 UV absorption layer/laminate |
|---|---|---|---|---|
| Transmittance | | | | |
| (%) | | | | |
| 350nm | ≤1/≤1 | ≤1/≤1 | ≤1/≤1 | 80/30 |
| 360nm | ≤1/≤1 | ≤1/≤1 | ≤1/≤1 | 85/41 |
| 370nm | ≤1/≤1 | ≤1/≤1 | ≤1/≤1 | 90/56 |
| 380nm | ≤1/≤1 | 50/30 | ≤1/≤1 | 90/63 |
| 390nm | ≤1/≤1 | 80/60 | ≤1/≤1 | 90/67 |
| 400nm | ≤1/≤1 | 80/65 | ≤1/≤1 | 90/72 |
| 410nm | 100/5 | 85/70 | 10/5 | 90/74 |
| 450nm | 90/73 | 90/75 | 90/73 | 90/79 |
| Initial luminous transmittance | | | | |
| (%) | -/73 | -/73 | -/73 | -/70 |
| Luminous transmittance after the | | | | |
| test (%) | -/72 | -/66 | -/71 | -/40 |

As apparent from Table 1, the laminated glasses of the invention obtained in Examples 1-3 show excellent optical transparency and weather resistance.

### [Example 4]

### <Preparation of film having antireflection layer and near-infrared shielding layer>

A coating liquid for hard coat layer having the following formulation (solid content: 40% by weight, viscosity: 100cP at 25°C) was applied onto a surface of a PET film (thickness: 188µm, A4300 available from Toyobo Co., Ltd.) with a bar coater so as to have a thickness of approx. 12µm, dried at 80°C for one minute in an oven and exposed to UV light (in accumulated amount of light of 1,000mJ/cm²) to be cured. Thereby, a hard coat layer having a thickness of 6.9µm was formed on the PET film.

| (Formulation of coating liquid for hard coat layer (parts: parts by weight)) | |
|---|---|
| Dipentaerythritol hexaacrylate | 100 parts |
| TiO₂ fine particles (mean particle size: 0.1µm) | 10 parts |
| Polymerization initiator (Irgacure 184 | |
| available from Ciba specialty chemicals) | 7 parts |
| Isopropyl alcohol (IPA) | 50 parts |
| Methyl ethyl ketone (MEK) | 100 parts |
| Cyclohexanone (CAN) | 25 parts |

Subsequently, a coating liquid for low inrefractive index layer having the following formulation was applied onto a surface of the hard coat layer with a bar coater, and dried and cured at 120°C for 30 minutes in an oven. Thereby, a low inrefractive index layer having a thickness of 90nm and inrefractive index of 1.40 was formed on the hard coat layer.

| (Formulation of coating liquid for low inrefractive index layer (parts: parts by weight)) | |
|---|---|
| Opstar JN-7212 (available from JSR Corporation) | 100 parts |
| Methyl ethyl ketone | 117 parts |
| Methyl isobutyl ketone | 117 parts |

A coating liquid having the following formulation was applied onto a back side of the PET film having the antireflection layer consisting of the hard coat layer and low inrefractive index layer with a bar coater, and dried and cured at 80°C for one minute in an oven. Thereby, a near-infrared shielding layer having color compensation function of a thickness 25µm was formed on the PET film.

| (Formulation of coating liquid for near-infrared shielding layer (parts: parts by weight)) | |
|---|---|
| Acrylic adhesive (SK Dyne 1435 available from | |
| Soken Chemical & Engineering Co., Ltd., solid content: 30% by weight, toluene/ethyl acetate solution) | 30 parts |
| Hardener (TD-75 available from | |
| Soken Chemical & Engineering Co., Ltd., solid content: 75% by weight, ethyl acetate solution) | 0.05 part |
| Cesium tungsten oxide (Cs_{0.33}WO₃, mean particle size: 80nm, | |
| solid content: 20% by weight, MIBK solution) | 1 part |

Thereby a film having the antireflection layer and near-infrared shielding layer was obtained.

### (Formation of mesh-shaped metal conductive layer)

A mesh-shaped metal conductive film having printed mesh-pattern (mean height: 3.3µm, pitch: 165µm, opening ratio: 80%) formed on a surface of a PET film (thickness: 100µm, A4303 available from Toyobo Co., Ltd.) was prepared.

Onto a back side of the mesh-shaped metal conductive film, a coating liquid having the following formulation was applied with a bar coater, and dried and cured at 80°C for five minutes in an oven. Thereby, an adhesive layer of a thickness 25µm was formed on the PET film.

| (Formulation of coating liquid for adhesive layer (parts: parts by weight)) | |
|---|---|
| Acrylic adhesive (SK Dyne 1435 available from | |
| Soken Chemical & Engineering Co., Ltd., solid content: 30% by weight, toluene/ethyl acetate solution) | 30 parts |
| Hardener (TD-75 available from | |
| Soken Chemical & Engineering Co., Ltd., solid content: 75% by weight, ethyl acetate solution) | 2 part |
| Neon shielding dye (dimethylquinacridone) | 0.02 part |
| Yellow dye (Aizenspiron Yellow 3RH available from Hodogaya Chemical Co., Ltd.) | 0.02 part |
| Red dye | 0.01 part |

### (Preparation of optical filter for display)

The resultant mesh-shaped conductive film having adhesive layer was placed on a glass plate such that the adhesive layer faced the glass plate, and the resultant film having antireflection layer and near-infrared shielding layer was placed on the mesh-shaped conductive layer such that the conductive layer faced the near-infrared shielding layer, and the resultant laminated layers were heated at 80°C under pressure to be bonded.

Thereby an optical filter for display was obtained.

### [Example 5]

### (Preparation of optical filter for display)

Procedures of Example 4 were repeated except changing an amount of neon shielding dye of the coating liquid for adhesive layer from 0.02 part to 0.03 part to prepare an optical filter for display.

### [Comparison Example 2]

### (Preparation of optical filter for display)

Procedures of Example 4 were repeated except using no yellow dye of the coating liquid for adhesive layer to prepare an optical filter for display.

### [Comparison Example 3]

### (Preparation of optical filter for display)

Procedures of Example 4 were repeated except using no neon shielding dye and no yellow dye of the coating liquid for adhesive layer to prepare an optical filter for display.

### [Comparison Example 4]

### (Preparation of optical filter for display)

Procedures of Example 4 were repeated except changing the pitch of the printed mesh-pattern from 165µm to 65µm (opening ratio: 48%) to prepare an optical filter for display.

### [Evaluation of optical filter]

### (1) Minimum luminous transmittance in visual ray of 560 to 610nm

By using transmission spectra of the optical filters obtained in Examples and Comparison Examples measured by a spectral photometer (UV3100PC available from Shimadzu Corporation), the tristimulus value according to JIS Z 8105-1982 (Y in tristimulus value of XYZ display system) of each of the spectra is calculated to obtain luminous transmittance Y. The calculation is carried out according to two degree of C light source (JIS Z8722-2000).

### (2) Hue (color phase) at the time of displaying red color

The filters obtained in Examples and Comparison Examples are attached to PDP, and the hue at the time of displaying red color is evaluated as follows:

⊚: Display of clear red color
○: Display of red color
Δ: Display of slightly vermilion red color
×: Display of vermilion color

### (3) b^{*} in the L^{*} a^{*} b^{*} display system (CIE L^{*} a^{*} b^{*} system)

The L^{*}, a^{*}, b^{*} in the L^{*} a^{*} b^{*} display system of each of the test specimens of the filters obtained in Examples and Comparison Examples is measured by a spectral photometer (U2900 available from Hitachi, Ltd.). The measurement is carried out by using F₁₀ as standard light and in the condition of incident angle of ±2°.

### (4) Hue (color phase) at the time of displaying black color

The filters obtained in Examples and Comparison Examples are attached to PDP, and the hue at the time of displaying black color is evaluated as follows:

⊚: Display of clear black color
○: Display of black color
△: Display of slightly blue black color
×: Display of blue color

### (5) Luminous transmittance in whole visual ray (transmittance Y (C-2))

The measurement is carried out in the same manner as the above (1).

The measured results are shown below.

[Table 2]

**Table 2**

| | Minimum luminous transmittance (560-610nm) | Red color display | b^{*} | Black color display | Luminous transmittance in whole visual ray |
|---|---|---|---|---|---|
| Example 4 | 25% | ○ | -2 | ⊚ | 45% |
| Example 5 | 18% | ⊚ | -7 | ○ | 41% |
| Co. Ex. 2 | 35% | ○ | -20 | × | 47% |
| Co. Ex. 3 | 52% | × | -5 | ○ | 55% |
| Co. Ex. 4 | 16% | ○ | -2 | ⊚ | 25% |

### [Example 6]

### (Preparation of intermediate layer)

Raw materials having the following formulation were processed by calendaring process to prepare an EVA sheet (thickness: 0.7mm) as an intermediate layer (transparent adhesive layer). The raw materials were kneaded at 80°C for 15 minutes, and the calendar rolls had a temperature of 80°C and the processing rate was 5m/min.

| (Formulation (parts: parts by weight)) | |
|---|---|
| EVA resin (content of vinyl acetate: 25 wt. %, Ultracene 635 available from Tosoh Corporation): | 100 parts |

| Crosslinker | |
|---|---|
| (t-butylperoxy-2-ethylhexyl monocarbonate, Perbutyl E available from NOF Corporation): | 2.2 parts |

| Silane coupling agent | |
|---|---|
| (KBM503 available from | |
| Shin-Etsu Chemical Co., Ltd.): | 1.0 part |

| UV absorber | |
|---|---|
| (2,2'-dihydroxy-4,4'-dimethoxybenzophenone, Uvinul 3049 available from BASF Japane): | 0.1 parts |

### (Preparation of PET film having heat-ray shielding layer)

A coating liquid for heat-ray shielding layer having the following formulation was applied onto a PET film (thickness: 200µm) with a bar coater, and dried at 80°C for 30 seconds. Thereby a heat-ray shielding layer having thickness of 1 µm was formed.

| (Formulation (parts: parts by weight)) | |
|---|---|
| Fluoro resin containing functional group | |
| (solid content: 15% by weight, MIBK 85% by weight; Optool AR-110 (the above-mentioned polymer A), available from Daiklin Industries, Ltd.) | 100 parts |
| Cesium tungsten oxide (Cs₀.₃₃ WO₃, Solid content: 20% by weight, MIBK: 80% by weight) | 100 parts |

### (Preparation of laminate)

A PET film having heat-ray shielding layer obtained above was inserted between the two glass plates with inserting the EVA sheet each of two gaps between the glass plates and the PET film, and the glass plates having the PET film and the two EVA sheets was inserted in a rubber bag and deaired in vacuum and preliminary bonded at 110°C. Subsequently, the preliminary bonded glasses was introduced into an oven and pressurized at 130°C for 30 minutes to prepare a laminated glass (glass plate/EVA sheet/PET film/EVA sheet /glass plate) of the invention. The PET is the PET film having heat-ray shielding layer.

### [Example 7]

The procedures of Example 6 were repeated except for preparing the PET film having heat-ray shielding layer in the following manner to prepare a laminated glass.

### (Preparation of PET film having heat-ray shielding layer)

A coating liquid for heat-ray shielding layer having the following formulation was applied onto a PET film (thickness: 200µm) with a bar coater, dried at 80°C for 30 seconds, and exposed to UV light (in 1,000mJ/cm² by using high-pressure mercury lamp). Thereby a heat-ray shielding layer having thickness of 1 µm was formed.

| (Formulation (parts: parts by weight)) | |
|---|---|
| Fluoro resin containing functional group | |
| (solid content: 15% by weight, MIBK 85% by weight; Optool AR-110 (the above-mentioned polymer A), available from Daiklin Industries, Ltd.) | 100 parts |
| Cesium tungsten oxide (Cs₀.₃₃WO₃, Solid content: 20% by weight, MIBK: 80% by weight) | 100 parts |

| Irgacure 184 | |
|---|---|
| (Available from Ciba specialty chemicals) | 2 parts |

### [Example 8]

The procedures of Example 6 were repeated except for preparing the PET film having heat-ray shielding layer in the following manner to prepare a laminated glass.

### (Preparation of PET film having heat-ray shielding layer)

A coating liquid for heat-ray shielding layer having the following formulation was applied onto a PET film (thickness: 200µm) with a bar coater, and dried at 120°C for two minutes. Thereby a heat-ray shielding layer having thickness of 1 µm was formed.

| (Formulation (parts: parts by weight)) | |
|---|---|
| Silicone resin | |
| (solid content: 20% by weight, Toluene 80% by weight; KR-251 (the above-mentioned polymer A), available from Shin-Etsu Chemical Co., Ltd.) | 75 parts |
| Cesium tungsten oxide (Cs_{0.33}WO₃, Solid content: 20% by weight, MIBK: 80% by weight) | 100 parts |

### [Comparison Example 5]

The procedures of Example 6 were repeated except for preparing the PET film having heat-ray shielding layer in the following manner to prepare a laminated glass.

### (Preparation of PET film having heat-ray shielding layer)

A coating liquid for heat-ray shielding layer having the following formulation was applied onto a PET film (thickness: 200µm) with a bar coater, and dried at 120°C for two minutes. Thereby a heat-ray shielding layer having thickness of 1 µm was formed.

| (Formulation (parts: parts by weight)) | |
|---|---|
| Unsaturated polyester resin | |
| (solid content: 15% by weight) | 100 parts |
| Cesium tungsten oxide (Cs_{0.33}WO₃, Solid content: 20% by weight, MIBK: 80% by weight) | 100 parts |

### [Evaluation of laminate]

### (1) Initial luminous transmittance (Y in XYZ display system in visual field of 2 degrees)

By using transmission spectra of the films measured by a spectral photometer (UV3100PC available from Shimadzu Corporation), Y in tristimulus value of XYZ display system is calculated to set it to luminous transmittance Y. The calculation is carried out according to JIS Z8722-2000.

### (2) Luminous transmittance after weather resistant test

Super UV test, which is performed by using Super UV tester SLTV-F 11 (available from Iwasaki Electric Co., Ltd.), is carried out for 250 hours, and thereafter the above-mentioned luminous transmittance (1) is measured.

The measured results are shown below.

[Table 3]

**Table 3**

| | Initial luminous transmittance (%) | Luminous transmittance after the test (%) |
|---|---|---|
| Example 6 | 70% | 66% |
| Example 7 | 70% | 66% |
| Example 8 | 70% | 62% |
| Co. Ex. 5 | 70% | 45% |

As apparent from Table 3, the laminated glasses of the invention obtained in Examples 6-8 show excellent optical transparency and weather resistance.

### [Industrial applicability]

The near-infrared shielding material of the invention comprising tungsten oxide and/or composite tungsten oxide that efficiently shields near-infrared ray, and a compound having absorption maximum in a wavelength region of 200 to 500nm is useful in an optical filter for display or a laminated glass

In case the near-infrared shielding material contains an ultraviolet absorber as the compound having absorption maximum in a wavelength region of 200 to 500nm not to oxidize tungsten of the oxide, the use of the laminated glass results in that the room inside does not suffer from increase of temperature and hence is comfortable, and further the transparency of the windows can be also maintained, whereby a safe drive is ensured.

In case the optical filter for display having the near-infrared shielding material is used especially as an optical filter for PDP, the resultant displayed image of PDP is good because of effective shielding of near-infrared ray, and further the transparency of the filter is maintained for a long period of time whereby the good image is ensured for a long period of time.

In case the near-infrared shielding material contains a compound such as yellow dye or pigment for the repression and removal of bluish discoloration as the compound having absorption maximum in a wavelength region of 200 to 500nm, the optical filter for display having the near-infrared shielding material (film) has excellent near-infrared shielding properties and show good display properties.

Further, the near-infrared shielding material has excellent near-infrared shielding properties and shows the transparency maintained for a long period of time and/or god color reproducibility, and therefore the shield is useful in uses (e.g., widow glass, show case) other than display.

## Claims

1. A near-infrared shielding material comprising tungsten oxide and/or composite tungsten oxide and a compound having absorption maximum in a wavelength region of 200 to 500nm.

2. A near-infrared shielding material as defined in claim 1, wherein the compound having absorption maximum in a wavelength region of 200 to 500nm is an ultraviolet absorber having absorption maximum in a wavelength region of 250 to 450nm.

3. A near-infrared shielding material as defined in claim 2, wherein the ultraviolet absorber is a benzotriazole compound, a benzophenone compound and/or a triazine compound.

4. A near-infrared shielding material as defined in claim 2, wherein the ultraviolet absorber is titanium oxide and/or zinc oxide.

5. A near-infrared shielding material as defined in claim 1, wherein the compound having absorption maximum in a wavelength region of 200 to 500nm is a compound having absorption maximum in a wavelength region of 300 to 500nm.

6. A near-infrared shielding material as defined in any of claims 1 to 5, which further contains weather proof resin.

7. A near-infrared shielding material as defined in claim 6, wherein the weather proof resin is fluoro resin or silicone resin.

8. A near-infrared shielding material s defined in any of claims 1 to 7, which comprises a layer comprising tungsten oxide and/or composite tungsten oxide and a compound having absorption maximum in a wavelength region of 200 to 500nm, or comprises a layer comprising tungsten oxide and/or composite tungsten oxide and another layer comprising a compound having absorption maximum in a wavelength region of 200 to 500nm.

9. A near-infrared shielding material defined in any of claims 1 to 8, wherein the tungsten oxide and/or composite tungsten oxide is in the form of fine particle.

10. A near-infrared shielding material defined in claim 9, wherein the fine particle has mean particle size of not more than 400nm.

11. A near-infrared shielding material defined in any of claims 1 to 9, wherein the tungsten oxide is represented by a general formula WyO_{z} wherein W represents tungsten, O represents oxygen, and y and z satisfy the condition of 2.2≤z/y≤2.999, and the composite tungsten oxide is represented by a general formula MxWyOz wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.

12. A laminate comprising two substrates and an intermediate film interposed therebetween, the substrates and the intermediate film being integrated by bonding them with each other,
wherein, between the substrate and the intermediate layer, a heat-ray shielding layer and an intermediate layer, or a heat-ray shielding layer, a plastic film and an intermediate layer, or a heat-ray shielding layer, a plastic film, an ultraviolet absorption layer and an intermediate layer are provided, and
the heat-ray shielding layer comprises tungsten oxide and/or composite tungsten oxide, and the intermediate layer and/or the ultraviolet absorption layer comprises a compound having absorption maximum in a wavelength region of 200 to 500nm.

13. A laminate comprising two substrates and an intermediate film interposed therebetween, the substrates and the intermediate film being integrated by bonding them with each other,
wherein one of the two substrates is a glass plate and the other is a plastic film having a hard coat layer on its surface opposite to a surface having the intermediate layer, and
between the intermediate layer and the plastic film, a heat-ray shielding layer or a heat-ray cut layer and an ultraviolet absorption layer is provided, and
the heat-ray shielding layer comprises tungsten oxide and/or composite tungsten oxide, and the intermediate layer and/or the ultraviolet absorption layer comprises a compound having absorption maximum in a wavelength region of 200 to 500nm.

14. A laminate as defined in any of claims 12 to 13, which further contains weather proof resin.

15. An optical filter for display comprising a layer having near-infrared shielding function,
wherein the layer having near-infrared shielding function comprises tungsten oxide and/or composite tungsten oxide, and the said layer or another layer comprises a compound having absorption maximum in a wavelength region of 200 to 500nm.

16. An optical filter for display comprising an antireflection layer, a layer having near-infrared shielding function and an adhesive layer,
wherein the layer having near-infrared shielding function comprises tungsten oxide and/or composite tungsten oxide, and the adhesive layer comprises a compound having absorption maximum in a wavelength region of 200 to 500nm.

17. An optical filter for display as defined in any of claims 15 to 16, which further comprises a conductive layer.

18. An optical filter for display comprising a substrate, a conductive layer and an antireflection layer provided in this order on one surface of the substrate, and an adhesive layer and if necessary a layer having near-infrared shielding function provided on the other surface of the substrate,
wherein one of the conductive layer and antireflection layer, or the adhesive layer, or the layer having near-infrared shielding function comprises tungsten oxide and/or composite tungsten oxide, and one of the above-mentioned layers comprises a compound having absorption maximum in a wavelength region of 200 to 500nm.

19. An optical filter for display comprising a substrate having an antireflection layer thereon, and another substrate a conductive layer thereon, the substrates being bonded with each other,
which comprises tungsten oxide and/or composite tungsten oxide, and a compound having absorption maximum in a wavelength region of 200 to 500nm.

20. An optical filter for display as defined in any of claims 15 to 19, which further contains weather proof resin.
